# EUROPÄISCHE PATENTSCHRIFT

(11) **EP 3 064 898 B1**
(45) Veröffentlichungstag und Bekanntmachung des Hinweises auf die Patenterteilung: **18.12.2019**
(21) Anmeldenummer: 15157668.3
(22) Anmeldetag: 04.03.2015
(51) Int. Cl.: G01C 15/00, G01S 17/89, G01S 17/42, G01S 17/66

(54) **Vermessungsgerät mit Feinanzielungs- bzw. Zielverfolgungsfunktionalität**
Measuring device with precise targeting and target tracking functionality
Appareil de mesure ayant une fonctionnalité de suivi de cible ou de visée fine

(43) Veröffentlichungstag der Anmeldung: 07.09.2016
(73) Patentinhaber: Leica Geosystems AG, 9435 Heerbrugg (CH)
(72) Erfinder: Hornung, Ulrich, 9008 St.Gallen (CH)
(74) Vertreter: Kaminski Harmann

(56) Entgegenhaltungen:
- EP-A1- 1 329 690
- EP-A1- 1 876 415
- EP-A1- 2 620 746

## Beschreibung

Die Erfindung betrifft ein Vermessungsgerät mit Feinanzielungs- bzw. Zielverfolgungsfunktionalität nach dem Oberbegriff des Anspruchs 1 oder 8 und ein Verfahren nach Anspruch 12 für ein solches Vermessungsgerät.

Zum Vermessen eines oder mehrerer Zielpunkte sind zahlreiche Vermessungsgeräte bekannt. Allgemein bekannte moderne Beispiele für solche Vermessungsgeräte sind Lasertracker, also Messvorrichtungen, die für eine fortlaufende Verfolgung eines Zielpunkts und eine koordinative Positionsbestimmung dieses Punkts ausgebildet sind, oder speziell auf geodätische Vermessungen zugeschnittene Vermessungsgeräte wie Tachymeter und Totalstationen. Letztere werden auch als elektronischer Tachymeter oder Computer-Tachymeter bezeichnet und weisen eine Reihe von verschiedenen Subsystemen zur hochgradig automatischen bzw. automatisierten Erfüllung der Vermessungsaufgaben auf. Ein geodätisches Vermessungsgerät des Stands der Technik ist beispielsweise in der EP 1686350 beschrieben. Als räumliche Standarddaten werden dabei Entfernung und Richtung bzw. horizontaler und vertikaler Winkel von einem Vermessungsgerät, dessen absolute Position bekannt ist, zum zu vermessenden Zielpunkt aufgenommen.

In vielen Anwendungen erfolgt eine Vermessung von Punkten, indem dort speziell ausgestaltete Zielobjekte platziert oder auf einem beweglichen Fahrzeug montiert werden. Diese bestehen beispielsweise aus einem Lotstock mit einem Retroreflektor (z.B. einem Rundum-Prisma) zur Definition der Messtrecke bzw. des Messpunktes. Es sind aber auch reflektorlos arbeitende Vermessungssysteme möglich, wie sie beispielsweise in der europäischen Patentschrift EP 2 495 236 A1 beschrieben sind.

Die bei einer Vermessung beispielsweise im Strassen- oder Tunnelbau geforderten Genauigkeiten liegen im Millimeterbereich auch auf grosse Entfernungen zwischen Vermessungsgerät und Zielpunkt von über 100 Metern mit entsprechend hohen Anforderungen an das Vermessungsgerät und gegebenenfalls an das retroflektierende Zielobjekt, mit dem ein zu vermessender Zielpunkt markiert ist.

Zum Anvisieren bzw. Anzielen des zu vermessenden Zielpunkts weisen gattungsgemässe Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, so dass das Fernrohr durch Schwenken und Kippen auf den zu vermessenden Punkt ausgerichtet werden kann. Moderne Totalstationen verfügen zudem über Mittel zur Motorisierung der Zieloptik und zur automatischen Zielanvisierung/Feinanzielung und Zielverfolgung (target sighting/fine targeting bzw. target tracking), im Folgenden mit ATR (Automatic Target Recognition) abgekürzt. Eine Beschreibung eines solchen ATR-Systems findet sich z.B. in der Schrift von Kirschner, H. und Stempfhuber, W.: The Kinematic Potential of Modern Tracking Total Stations - A State of the Art Report on the Leica TPS1200+. 1st International Conference on Machine Control & Guidance 2008 (aufgerufen am 4.3.2015 unter www.mcg.ethz.ch/papres/Kirschner_Stempfhuber_05.pdf).

Die ATR-Systeme nach dem Stand der Technik weisen Mittel zur Emission eines Beleuchtungsstrahls auf und zur Erfassung zumindest eines Teils des von einem Ziel, z.B. einem Umgebungspunkt oder reflektierenden Prisma, rückgestrahlten Anteils des Beleuchtungsstrahls. Üblicherweise erfolgt das Beleuchten dabei durch fortlaufende Emission kurzer Beleuchtungsstrahlpulse bzw. Beleuchtungsstrahlblitze, wobei es sich bei dem Beleuchtungsstrahl beispielsweise um einen divergenten Laserstrahl handelt und entsprechend fortlaufend Laserpulse als Beleuchtungsstrahlblitze emittiert werden. Dabei wird das reflektierte Laserlicht als Reflexfleck (Lichtfleck) auf einem Bildsensor, z.B. einem CMOS-2D-Chip, abgebildet. Je nach Abweichung der Ausrichtung der optischen Anzielachse von der Richtung zum Zielobjekt weicht dabei auch die Auftreffposition der reflektierten Strahlung auf dem ATR-Sensor von einer zentralen Sensorflächenposition ab, d.h. der Lichtfleck des am Prisma retroreflektierten ATR-Beleuchtungsstrahls auf dem ATR-Flächensensor liegt nicht im Zentrum des ATR-Flächensensors und trifft somit nicht auf einer Soll-Position auf, die z.B. anhand Kalibrierung als jene mit der optischen Zielachse korrespondierende Position festgelegt wurde. Somit wird im Rahmen einer Feinanzielfunktion anhand der Lage des Reflexflecks bzw. der belichteten Pixel auf dem Bildsensor auf die Lage des Ziels relativ zur optischen Anzielachse geschlossen. Im Falle einer Abweichung wird mittels der Feinanzielfunktion üblicherweise motorisiert die Ausrichtung der Visiereinrichtung derart geringfügig nachgestellt, dass der am Prisma retroreflektierte ATR-Messstrahl hochpräzise im Zentrum der Sensorfläche auf dem ATR-Flächensensor auftrifft, d.h. die Horizontal- und Vertikalwinkel der Visiereinrichtung werden derart iterativ geändert und angepasst, bis das Zentrum des Reflexflecks mit der Sollposition auf dem ATR-Flächensensor zusammenfällt. Zur Sicherstellung des Funktionierens der automatischen Feinanzielung ist es erforderlich, vor Funktionsstart die Visiereinrichtung zumindest derart ungefähr auf den Zielreflektor auszurichten, dass der ATR-Beleuchtungsstrahl auch auf dem Prisma und von dort reflektiert auf dem ATR-Flächensensor auftrifft. Dafür kann z.B. zuvor eine manuelle Anzielung des Ziel-Reflektors basierend auf Augenmass erfolgen oder eine automatische Grobanzielfunktion ausgeführt werden.

Neben der ATR-Feinanzielfunktionalität kann auf ähnliche Weise und unter Verwendung derselben ATR-Komponenten auch eine automatische Zielverfolgungsfunktionalität bereitgestellt sein, wie dies vor allem bei Lasertrackern, aber auch modernen Totalstationen der Fall ist. Bei der Zielverfolgung wird die Position des sich bewegenden Ziels kontinuierlich bzw. in sehr kleinen zeitlichen Abständen bestimmt. Die Messung/das Vermessungsgerät folgt der Verlagerung des geodätischen Ziels. Nach erfolgter ATR-Feinanzielung wird also die Anvisiereinrichtung weiterhin derart Bewegungen des Zieles "live" und entsprechend schnell nachgeführt, dass das Zentrum des ATR-Reflexflecks weiterhin möglichst genau und stets auf der Soll-Position auf dem ATR-Flächensensor bleibt. Es wird dann oft von einem "Einlocken" auf das Ziel gesprochen bzw. davon, dass das Ziel "eingelockt" ist.

Probleme können hierbei auftreten, wenn sich das Ziel derart ruckartig und schnell bewegt, dass es aus dem Sichtbereich des ATR-Detektors verschwindet (d.h. keine am Ziel reflektierte ATR-Messstrahlung mehr auf dem ATR-Flächensensor auftrifft). Andere Ursachen, die ein Erkennen des Ziels bzw. dessen Feinanzielung bzw. Verfolgung erschweren oder verunmöglichen bzw. die maximale operative Reichweite einschränken, sind in Umgebungseinflüssen begründet. Derlei störende Umgebungseinflüsse sind vor allem den optischen Pfad beeinflussende Witterungseinflüsse, wie Regen, Nebel oder Hitzeflimmern. Weiter sind Fremdreflexe störend, also z.B. Licht, welches neben der vom Ziel reflektierten Messstrahlung auf den Bildsensor abgebildet wird. Solche Fremdreflexe sind verursacht durch fremde Licht- bzw. Strahlquellen wie direkte oder indirekte, also von Strassenschildern oder Glasflächen reflektierte, Sonneneinstrahlung oder Scheinwerfer von Baufahrzeugen. Besonders bei der Zielverfolgung sind Störungen problematisch, da diese häufig zum Verlust des Einlockens auf den Zielreflex führen, was ein zeitaufwändiges erneutes Einlocken erforderlich macht.

Zur Verminderung von Störungen durch Witterungseinflüsse bieten Totalstationen nach dem Stand der Technik die Option an, Parameter des ATR-Systems bzw. der Feinanziel- bzw. Verfolgungsfunktion durch manuelles Konfigurieren durch den Benutzer witterungsabhängig einzustellen. Dabei erfolgt allerdings nur ein grobes Einstellen der Totalstation auf die vorliegenden Witterungsverhältnisse, so dass meist keine optimale Parameterwahl vorliegt, und zudem ist dies mit zusätzlichem Aufwand für den Benutzer verbunden.

Zur Eliminierung von Fremdreflexen bzw. Unterscheidung zwischen dem Reflex des Ziels und Fremdreflexen, also zur Unterscheidung zwischen dem Reflexfleck und anderen Lichtflecken auf dem Sensor, die entweder durch externe Lichtquellen oder von an einem Nicht-Ziel reflektierten Beleuchtungsstrahlanteil herrühren, ist aus dem Stand der Technik eine automatische Zielerkennung bekannt, bei gleich bleibender Ausrichtung und Lage von Vermessungsgerät und Ziel zwei Bilder mit dem Bildsensor aufzunehmen, wobei beim Aufnehmen eines der beiden Bilder keine Emission des Beleuchtungsstrahls erfolgt. Dadurch ist nur in einem der Bilder ein Reflexfleck detektierbar, so dass durch Bildverarbeitung mit Differenzenbildung der beiden Bilder der Reflexfleck vom Rauschen bzw. Fremdreflexen unterschieden bzw. das Ziel erkannt werden kann. Dieses Verfahren ist allerdings nur für den statischen Fall möglich, d.h. ohne Relativbewegung von Ziel bzw. Fremdreflexquelle zu Vermessungsgerät. Ein solches Verfahren wird beispielsweise im White Paper "Direct Aiming Station" der Firma Topcon offenbart, abgerufen am 4.3.2015 unter www.topcontotalcare.com/files/2013/7525/6386/DS_WP_P-180-2_TE.pdf.

Die WO 1997/10517 A1 offenbart ein Zielerkennungsverfahren mit Modulierung der Polarisation des ausgesandten Lichts. Nachteilig hierbei ist der zusätzliche Aufwand zur Polarisierung, u.a. in Form von Polarisationsmitteln, die zudem zumindest teilweise am Zielreflektor angeordnet sein müssen, so dass herkömmliche Retroreflektoren nicht verwendet werden können. Die WO 2011/098131 verwendet eine Vorrichtung mit zwei unterschiedlich angeordneten Strahlungsquellen und mindestens zwei Bildsensoren, wobei anhand der Signale der Bildsensoren bei Beleuchtung mit reflektiertem Licht der ersten Strahlungsquelle und der Signale bei Beleuchtung mit reflektiertem Licht der zweiten Strahlungsquelle eine Unterscheidung von Reflexen erfolgt. Nachteilig ist auch hier wieder der zusätzliche Aufwand an Mitteln, diesmal in Form der zusätzlichen Lichtquelle und Bildsensoren. Zudem werden in beiden genannten Dokumenten störende Witterungseinflüsse nicht behandelt. Die EP 2 620 746 A1 offenbart ein Vermessungsgerät mit Scanfunktionalität und Einzelpunktmessmodus.

Aufgabe der vorliegenden Erfindung ist deshalb, ein Vermessungsgerät mit verbesserter automatischer Feinanzielungs- und Zielverfolgungsfunktionalität bereitzustellen.

Eine weitere Aufgabe der vorliegenden Erfindung ist die Bereitstellung eines Vermessungsgeräts mit automatischer Feinanzielungs- und Zielverfolgungsfunktionalität mit verbesserter Erkennung bzw. Berücksichtigung von Fremdreflexen und/oder Witterungseinflüssen.

Eine weitere Aufgabe der vorliegenden Erfindung ist die Bereitstellung eines Vermessungsgeräts mit automatischer Feinanzielungs- und Zielverfolgungsfunktionalität, welches eine hinsichtlich der vorliegenden Umgebungsbedingungen optimierte Einstellung von Parametern der Funktionalität ermöglicht.

Eine weitere Aufgabe besteht in der Bereitstellung eines Verfahrens für ein solches Vermessungsgerät mit Feinanzielungs- und Zielverfolgungsfunktionalität.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen. Alle dargestellten oder in dieser Schrift anderweitig offenbarten Ausführungsformen der Erfindung sind miteinander kombinierbar, wenn nicht ausdrücklich anders festgestellt.

Die Erfindung betrifft ein Vermessungsgerät mit Positionsbestimmungsfunktionalität zur Bestimmung der Position eines Zielpunkts mit Bezug zu einem inneren Koordinatensystem. Vorzugsweise ist das Vermessungsgerät ausgebildet als geodätisches Vermessungsgerät in Form einer Totalstation, eines Theodolit oder Tachymeters, oder als Koordinatenmessgerät in Form eines Lasertrackers. Das Vermessungsgerät weist auf eine Steuer- und Auswerteeinheit mit Auswerte-, Datenverarbeitungs- und Steuerungsfunktionalität, eine Basis, und eine eine Zielachse definierende Anzieleinrichtung, z.B. ein Zielfernrohr oder Teleskop. Das Vermessungsgerät weist weiter Mittel auf zur Veränderung der Ausrichtung der Zielachse, welche optional Motorisierungsmittel zur Verschwenkung der Anzieleinrichtung gegenüber der Basis umfassen. Weiter weist das Vermessungsgerät eine Strahlquelle zur Emission eines Beleuchtungsstrahls, insbesondere eines Laserstrahls, definierter Intensität in Richtung der Zielachse auf, wobei mittels der Steuer- und Auswerteeinheit die Emissionsdauer dergestalt regelbar ist, dass fortlaufend Beleuchtungsstrahlblitze erzeugbar sind. Unter einem Beleuchtungsstrahlblitz ist dabei ein Beleuchtungsstrahl begrenzter Dauer bzw. Länge zu verstehen. Zur Detektion von reflektierten Beleuchtungsstrahlen weist das Vermessungsgerät einen photosensitiven flächenhaften Sensor, insbesondere einen CMOS-2D-Sensor, auf zur Detektion von reflektierten Beleuchtungsstrahlen. Die Aufnahme von Bildern durch den Sensors ist mittels der Steuer- und Auswerteeinheit dergestalt regelbar ist, dass fortlaufend reflektierte Beleuchtungsstrahlblitze erfassende Bilder erzeugbar sind. Wie dem Fachmann bekannt, ist hierbei unter einem "Bild" das Ergebnis eines zeitlich befristeten Erfassungsvorgangs zu verstehen, bei dem auf dem Sensor auftreffende Strahlung während einer bestimmten Erfassungsdauer bzw. Belichtungszeit registriert wird, woraus ein auswertbares Ausgangssignal des Sensors erstellbar ist. Ein auf den Sensor auftreffendes Strahlungsbündel erscheint als Lichtfleck im Bild. Ein jeweiliger vom Zielpunkt reflektierter Beleuchtungsstrahlblitz erscheint dabei als Reflexfleck, im Unterschied zu einem Fremdreflex, womit ein Lichtfleck bezeichnet ist, der durch Fremdstrahlung verursacht ist bzw. durch Beleuchtungsstrahlung, die nicht vom Zielpunkt reflektiert ist.

Das Vermessungsgerät verfügt ausserdem über eine Feinanzielungs- und Zielverfolgungsfunktionalität. Im Rahmen der Feinanzielungs- und Zielverfolgungsfunktionalität wird aus der detektierten Lage des Reflexflecks im Bild eine Abweichung zwischen einer jeweils aktuellen, tatsächlichen Ausrichtung der Zielachse und einer fiktiven, den Zielpunkt anvisierenden Ausrichtung der Zielachse bestimmt. Anhand der bestimmten Abweichung erfolgt mittels der Motorisierungsmittel die Ausrichtung der Zielachse zur Feinanzielung und/oder Verfolgung des Zielpunkts. Mittels der Feinanzielungs- und Zielverfolgungsfunktionalität wird also die Zielachse präzise auf den Zielpunkt ausgerichtet bzw. die Zielachse fortlaufend einem sich bewegenden Zielpunkt nachgeführt. Bei der Zielverfolgung wird die Position des sich bewegenden Ziels kontinuierlich bzw. in sehr kleinen zeitlichen Abständen bestimmt. Die Messung/das Vermessungsgerät folgt der Verlagerung des Ziels.

Erfindungsgemäss ist die Steuer- und Auswerteeinheit dergestalt ausgebildet, dass im Rahmen der Feinanzielungs- und Zielverfolgungsfunktionalität automatisch gesteuert durch die Steuer- und Auswerteeinheit entsprechend einem definierten Algorithmus eine Variation der Emission des Beleuchtungsstrahls erfolgt. Diese Variation erfolgt dabei dergestalt, dass bei fortlaufender Erzeugung der Beleuchtungsstrahlblitze eine bekannte Abfolge von unterschiedlichen Beleuchtungsstrahlblitzen entsteht. Vorzugsweise wird dabei die Intensität und/oder die Emissionsdauer des Beleuchtungsstrahls variiert, so dass die Abfolge unterschiedliche intensive und/oder unterschiedlich lange Beleuchtungsstrahlblitze aufweist. "Bekannt" heisst im Rahmen der vorliegenden Erfindung, dass, vorzugsweise in der Steuer- und Auswerteeinheit selbst, Information über die Abfolge der Beleuchtungsstrahlblitze hinterlegt ist, z.B. der definierte Algorithmus selbst oder aus diesem abgeleitete Daten, die eine Wiedererkennung der Abfolge ermöglichen. Beispielsweise beinhaltet diese Information, dass die Abfolge Beleuchtungsstrahlblitze einer ersten Intensität und einer zweiten, zur ersten unterschiedlichen, Intensität aufweist, die sich fortwährend abwechseln. Oder die Information beinhaltet, dass auf zehn Beleuchtungsstrahlblitze gleicher Dauer zwei Beleuchtungsstrahlblitze wesentlich kürzerer Dauer folgen (bzw. beinhaltet die Information, dass die Emission fortlaufend zwischen zwei Intensitäten variiert oder auf zehn lange Emissionen zwei kurze folgen). Das zweite Abfolgebeispiel zeigt Ähnlichkeiten zu einer zeichenhaften Codierung wie dem Morse-Code, das erste Abfolgebeispiel gleicht dem andauernden Aussenden eines "einfachen" Identifikationssignals wie einem Bergungssignal oder dem Lichtsignal eines Leuchtturms (wobei die Zeiten des Leuchtens den Beleuchtungsstrahlblitzen der ersten Intensität, die Zeiten des Nicht-Leuchtens den Beleuchtungsstrahlblitzen der zweiten Intensität entsprechen). Da der Zielpunkt den Beleuchtungsstrahl und damit die bekannte Abfolge der Beleuchtungsstrahlblitze reflektiert, ist somit auf vergleichsweise einfache Weise eine Identifizierbarkeit des Ziels durch die vorliegende Erfindung ermöglicht anhand der vom Ziel reflektierten Beleuchtungsstrahlblitze (bzw. der vom Ziel reflektierten Abfolge der reflektierten Beleuchtungsstrahlblitze).

In einer Fortbildung des Vermessungsgeräts ist die Steuer- und Auswerteeinheit deshalb zur Identifizierung von vom Zielpunkt reflektierter Beleuchtungsstrahlung ausgebildet. Die Identifizierung erfolgt im Rahmen der Feinanzielungs- und Zielverfolgungsfunktionalität anhand einer mit der bekannten Abfolge von unterschiedlichen Beleuchtungsstrahlblitzen korrespondierenden Abfolge von Reflexflecken, die fortlaufend in Bildern erfasst sind. Vorzugsweise erfolgt dabei für die Identifizierung ein Vergleichen von Abfolgen erfasster Lichtflecke mit der bekannten Abfolge von Beleuchtungsstrahlblitzen anhand von in der Steuer- und Auswerteeinheit hinterlegter definierter Vergleichskriterien. Das Vergleichen erfolgt hierzu z.B. anhand detektierter Helligkeiten der Lichtflecke. Die Helligkeit eines Lichtflecks im Bild ist abhängig von der Intensität der Strahlung, die auf den Sensor trifft. Intensivere Beleuchtungsstrahlblitze (oder Beleuchtungsstrahlblitze längerer Dauer) ergeben hellere Lichtflecke, weniger intensive (bzw. solche von geringerer Dauer) dunklere bzw. weniger helle Lichtflecke (bei sonst gleich bleibenden Erfassungsbedingungen bzw. Parametern der Bildaufnahme). Die Abfolge der Beleuchtungsstrahlblitze, die vom Zielpunkt reflektiert vom Sensor erfasst wird, ergibt also eine Abfolge von Lichtflecken, die der Beleuchtungsstrahlblitzabfolge entspricht, z.B. korrespondiert die Abfolge aus einem fortwährenden Wechsel von intensiv - nicht-intensiv mit der Abfolge hell-dunkel. Da die Abfolge der Beleuchtungsstrahlblitze der Steuer- und Auswerteeinheit bekannt ist, "erkennt" die Steuer- und Auswerteeinheit durch Vergleichen der beiden Abfolgen, dass die betrachteten Lichtflecke von vom Zielpunkt reflektierten Beleuchtungsstrahl verursacht sind, dass es sich bei den Lichtflecken also um Reflexflecke handelt. Fremdreflexe sind durch das Vergleichen als solche erkennbar, da z.B. Fremdstrahlung wie Sonnenlicht oder Scheinwerferlicht eine Abfolge von Lichtflecken konstanter Helligkeit oder zumindest nicht fortlaufend abwechselnder Helligkeiten verursacht, die nicht mit der bekannten Beleuchtungsstrahlblitzabfolge korrespondiert. Somit ermöglicht die vorliegende Erfindung auf einfache Weise eine Unterscheidbarkeit von Reflexflecken und Fremdreflexen bzw. von Beleuchtungsstrahlung und Fremdstrahlung.

Optional ist die Steuer- und Auswerteeinheit dergestalt zur Variation ausgebildet, dass sich die Beleuchtungsstrahlblitze wenigstens dergestalt unterscheiden, dass die Abfolge eine Sorte von Beleuchtungsstrahlblitzen erste Intensitäten aufweist, welche innerhalb eines definierten Standartintensitätsbereichs liegen, und eine andere Sorte von Beleuchtungsstrahlblitzen zweiter Intensitäten aufweist, welche deutlich unterhalb des definierten Standartintensitätsbereichs liegen, dabei aber bevorzugt immer noch deutlich von Null unterschieden sind. "Deutlich unterhalb" bzw. "deutlich unterschieden" bedeutet dabei, dass die zweite Intensität derart geringer ist, dass eine ausreichende Unterscheidbarkeit der Beleuchtungsstrahlblitze bzw. der durch sie verursachten Reflexflecke gegeben ist, so dass z.B. eine Abfolge von hell-dunkel (bzw. hell-weniger hell) ausreichend sicher erkennbar bzw. detektierbar ist. Der Standartintensitätsbereich ist dabei derjenige Bereich, der üblicherweise im Rahmen der der Feinanzielungs- und Zielverfolgungsfunktionalität für die Intensität des Beleuchtungsstrahls für eine variationslose Emission gewählt werden würde. Dabei können alle erste Intensitäten und/oder alle zweiten Intensitäten untereinander den gleichen Wert haben. Die Emissionsdauer ist dabei für alle Beleuchtungsstrahlblitze gleich oder wird sortenabhängig oder innerhalb einer Sorte ebenfalls variiert.

In einer weiteren Fortbildung ist die Steuer- und Auswerteeinheit dergestalt ausgebildet, dass die Variation abhängig ist von einer detektierten Helligkeit des reflektierten Beleuchtungsstrahls. Mit anderen Worten ist der definierte Algorithmus derart, dass die Helligkeit, die vom Sensor detektiert wird, bei der Variation der Emission berücksichtigt wird. Beispielsweise wird also die Intensität und/oder die Emissionsdauer des Beleuchtungsstrahls an die detektierte Helligkeit angepasst. Vorzugsweise wird dabei fortlaufend die Helligkeit der jeweils aktuellen reflektierten Beleuchtungsstrahlblitze detektiert und die Emission fortlaufend in Abhängigkeit der jeweils aktuell detektierten Helligkeit variiert, d.h. es erfolgt ein permanentes Anpassen der Emission bzw. deren Variation an die registrierte Helligkeit der Reflexflecke. Dabei umfasst "aktuell" nicht nur den zuletzt erfassten Beleuchtungsstrahlblitz bzw. den Reflexfleck des zuletzt verarbeiteten Bilds, sondern kann auch einen oder eine Reihe der zuletzt erfassten Beleuchtungsstrahlblitze einbeziehen. Z.B. wird optional die Emission dergestalt fortlaufend helligkeitsabhängig variiert, dass die Intensität und/oder Emissionsdauer nicht nach jedem einzelnen, sondern nach jedem zehnten, fünfzigsten oder hundertsten Reflexfleck bzw. Helligkeitsdetektion angepasst bzw. optimiert wird. Eine derartige Vorgehensweise ermöglicht das Einsparen von Rechenleistung bei -je nach Anwendungsfall bzw. erforderlicher Präzision und/oder Robustheit- ausreichender Optimierung der Emissionsvariation. Zusätzlich ist der photosensitive Sensor in manchen Ausführungsformen dergestalt ausgebildet, dass Aufnahmeparametern variabel sind, welche dann ebenfalls fortlaufend in Abhängigkeit der detektierten Helligkeit angepasst werden. So wird an Aufnahmeparametern z.B. fortlaufend die Belichtungszeit und/oder Verstärkung des Sensors an die detektierte Helligkeit angepasst, wodurch z.B. das Signal-Rausch-Verhältnis optimierbar ist.

Die Variation der Emission erfolgt helligkeitsabhängig bei Abfolgen mit Beleuchtungsstrahlblitzen einer ersten Intensität und wenigstens einer zweiten Intensität optional derart, dass die zweiten Intensitäten in Abhängigkeit der detektierten Helligkeit geregelt werden und die ersten Intensitäten aus den zweiten Intensitäten abgeleitet werden. D.h. die Beleuchtungsstrahlblitze der einen Sorte werden direkt in Abhängigkeit der Helligkeit eingestellt, die Beleuchtungsstrahlblitze der anderen Sorte werden hingegen indirekt helligkeitsabhängig angepasst. Im vorliegenden Fall ist also die erste Intensität abhängig von der zweiten, unmittelbar helligkeitsabhängigen, Intensität, wobei die erste Intensität vorzugsweise durch Multiplikation der zweiten Intensität mit einem konstanten Faktor ermittelt wird, wobei optional der Faktor mindestens 2, mindestens 3, oder mindestens 5, beträgt. Alternativ werden beide, bzw. bei mehr als zwei Intensitäten alle, Intensitäten eigenständig in Abhängigkeit der detektierten Helligkeit der jeweils zugehörigen Reflexflecke geregelt, so dass die Variation der Emission für Beleuchtungsstrahlblitze unterschiedlicher Sorte unterschiedlich helligkeitsabhängig erfolgen kann.

In einer weiteren Fortbildung des Vermessungsgeräts wird eine Variabilität von Aufnahmeparametern, insbesondere der Belichtungszeit und/oder der Verstärkung, des photosensitiven flächenhaften Sensors genutzt, um, gesteuert durch die entsprechend ausgebildete Steuer- und Auswerteeinheit, im Rahmen der Feinanzielungs- und Zielverfolgungsfunktionalität zusätzlich zur Variation der Emission des Beleuchtungsstrahls eine Variation von Aufnahmeparametern, insbesondere der Belichtungszeit und/oder Verstärkung, des photosensitiven flächenhaften Sensors durchzuführen. Dies erfolgt z.B. um die Identifizierung von vom Zielpunkt reflektierter Beleuchtungsstrahlung robuster zu gestalten. Zudem kann unter Umständen die Verwendung von Beleuchtungsstrahlblitzen relativ geringer Intensität, ausserhalb des Standartintensitätsbereichs, mit Nachteilen einhergehen. In solchen Fällen kann z.B. eine daraus resultierende relativ schlechte Erkennbarkeit von Reflexflecken zumindest teilweise dadurch kompensiert werden, dass ein reflektierter Beleuchtungsstrahl solch geringer Intensität mit grösserer Belichtungszeit, also länger, erfasst wird, wodurch eine bessere Detektierbarkeit bzw. Daten geringerer Unsicherheit bzw. ein besseres Signal-Rausch-Verhältnis des entsprechenden Reflexflecks erzielt wird.

Erfindungsgemäß ist die Steuer- und Auswerteeinheit dergestalt ausgebildet, dass mittels der Variation eine gleichförmige Abfolge aus einem sich wiederholenden Muster von Beleuchtungsstrahlblitzen erzeugt wird. Mit anderen Worten ist der Algorithmus dergestalt, das ein Variationsablauf fortwährend wiederholt wird, wodurch eine regelmässige Abfolge entsteht. Als besonders einfaches Beispiel ist das Muster ein Beleuchtungsstrahlblitz einer ersten Intensität, gefolgt von einem Beleuchtungsstrahlblitz einer zweiten, dazu unterschiedlichen, Intensität, so dass durch die Wiederholung des Musters sich Beleuchtungsstrahlblitze zweier unterschiedlicher Intensitäten fortwährend abwechseln, wobei die Emissionsdauer ebenfalls einem sich wiederholenden Muster aus unterschiedlich langen Emissionszeiten folgt oder bei allen Beleuchtungsstrahlblitzen gleich gross ist. Die Erfindung beschränkt sich gleichwohl nicht auf derlei einfache Muster bzw. derlei einfach gleichförmige Abfolgen, sondern umfasst z.B. hinsichtlich einer robusteren Unterscheidbarkeit zu Fremdreflexen komplexere bzw. variationsreichere Abfolgen.

Als weitere Option ist die Steuer- und Auswerteeinheit dergestalt ausgebildet, dass die Variation abhängig ist von einer Entfernung zum Zielpunkt. So wird z.B. die Intensität bzw. die Intensitäten des Beleuchtungsstrahls entfernungsabhängig geregelt, wobei vorzugsweise die Emission fortlaufend in Abhängigkeit der jeweils mittels einer Distanzmessfunktionalität des Vermessungsgeräts bestimmten aktuellen Entfernung zum Zielpunkt variiert wird, analog zur oben beschriebenen Abhängigkeit der Variation von der detektierten Helligkeit.

Die Erfindung betrifft weiter eine alternative Ausführungsform eines Vermessungsgeräts mit Positionsbestimmungsfunktionalität zur Bestimmung der Position eines Zielpunkts mit Bezug zu einem inneren Koordinatensystem. Vorzugsweise ist das Vermessungsgerät ausgebildet als geodätisches Vermessungsgerät in Form einer Totalstation, eines Theodolit oder Tachymeters, oder als Koordinatenmessgerät in Form eines Lasertrackers. Das Vermessungsgerät weist auf eine Steuer- und Auswerteeinheit mit Auswerte-, Datenverarbeitungs- und Steuerungsfunktionalität, eine Basis, eine eine Zielachse definierende Anzieleinrichtung, z.B. ein Teleskop oder ein Zielfernrohr. Das Vermessungsgerät weist weiter Mittel auf zur Veränderung der Ausrichtung der Zielachse, welche optional Motorisierungsmittel zur Verschwenkung der Anzieleinrichtung gegenüber der Basis umfassen. Weiter weist das Vermessungsgerät eine Strahlquelle zur Emission eines Beleuchtungsstrahls, z.B. Laserstrahls, definierter Intensität in Richtung der Zielachse auf, wobei mittels der Steuer- und Auswerteeinheit die Emissionsdauer dergestalt regelbar ist, dass fortlaufend Beleuchtungsstrahlblitze erzeugbar sind. Das Vermessungsgerät verfügt zudem über einen photosensitiven flächenhaften Sensor, z.B. CMOS-2D-Sensor, mit variabler Belichtungszeit und optional variabler Verstärkung, zur Detektion von reflektierten Anteilen des Beleuchtungsstrahls, wobei mittels der Steuer- und Auswerteeinheit eine Bildaufnahme durch den Sensor dergestalt regelbar ist, dass fortlaufend reflektierte Beleuchtungsstrahlblitze erfassende Bilder erzeugbar sind, und ein auf den Sensor auftreffendes Strahlungsbündel als Lichtfleck im Bild erscheint, wobei im Bild ein jeweiliger vom Zielpunkt reflektierter Beleuchtungsstrahlblitz als Reflexfleck erscheint.

Weiter weist die alternative Ausführungsform des Vermessungsgeräts eine Feinanzielungs- und Zielverfolgungsfunktionalität auf, wobei im Rahmen der Feinanzielungs- und Zielverfolgungsfunktionalität aus der detektierten Lage des Reflexflecks im Bild eine Abweichung zwischen einer jeweils aktuellen, tatsächlichen Ausrichtung der Zielachse und einer fiktiven, den Zielpunkt anvisierenden Ausrichtung der Zielachse bestimmt wird. Anhand der bestimmten Abweichung erfolgt mittels der Motorisierungsmittel die Ausrichtung der Zielachse zur Feinanzielung und/oder Verfolgung des Zielpunkts.

Erfindungsgemäss ist die Steuer- und Auswerteeinheit dieser alternativen Ausführungsform dergestalt ausgebildet, dass im Rahmen der Feinanzielungs- und Zielverfolgungsfunktionalität mittels fortlaufender Erzeugung der Beleuchtungsstrahlblitze eine bekannte Abfolge von Beleuchtungsstrahlblitzen entsteht und automatisch gesteuert durch die Steuer- und Auswerteeinheit entsprechend einem definierten Algorithmus, abgestimmt mit der Emission des Beleuchtungsstrahls, eine Variation der Belichtungszeit des photosensitiven flächenhaften Sensors erfolgt. Die Variation ist dabei dergestalt abgestimmt auf die Emission und erfolgt dergestalt, dass bei fortlaufender Erzeugung der Beleuchtungsstrahlblitze eine mit der bekannten Abfolge von Beleuchtungsstrahlblitzen korrespondierende Abfolge von Reflexflecken erfasst wird. D.h. die Abstimmung zwischen Belichtungszeit und Emission kann allein dahingehend erfolgen, dass die Belichtungszeit ausreichend lang ist, damit Beleuchtungsstrahlblitze, vor allem vollständig, erfassbar sind.

Aufgrund der Variation der Belichtungszeit dient die Abfolge der Reflexflecke mittels deren detektierten Helligkeiten zur Identifizierung von vom Zielpunkt reflektierter Beleuchtungsstrahlung. Vorzugsweise erfolgt für die Identifizierung ein Vergleichen von Abfolgen erfasster Lichtflecke mit der bekannten Abfolge von Beleuchtungsstrahlblitzen hinsichtlich detektierter Helligkeiten der Lichtflecke anhand von in der Steuer- und Auswerteeinheit hinterlegter definierter Vergleichskriterien. Beispielsweise sind Belichtungszeit und Emission derart aufeinander abgestimmt, dass die Emissionsdauer immer kürzer ist als die Belichtungszeit. Eine Variation der Belichtungszeit verändert dann die detektierte Helligkeit der Reflexflecke nicht. Die detektierte Helligkeit eines Fremdreflexes in den Bildern der grösseren Belichtungszeit ist jedoch aufgrund der längeren Belichtung des die Fremdstrahlung erfassenden Sensorbereichs grösser als in den Bildern, die mit der geringeren Belichtungszeit aufgenommen sind. Somit korrespondiert die Abfolge der Fremdreflexe nicht mit der Abfolge der Beleuchtungsstrahlblitze, während die Abfolge der Reflexflecke dies tut, so dass damit vom Zielpunkt rückgestrahlte Beleuchtungsstrahlung identifizierbar ist.

Optional ist die Steuer- und Auswerteeinheit der alternativen Ausführungsform derart ausgebildet, dass zusätzlich eine Variation weiterer Aufnahmeparameter wie der Verstärkung des Sensors erfolgt, und/oder die Belichtungszeit und/oder Verstärkung fortlaufend abhängig von der detektierten Helligkeit des reflektierten Beleuchtungsstrahls angepasst wird, analog der oben beschriebenen Abhängigkeit der Emissionsvariation von der detektierten Helligkeit.

In einer Fortbildung der alternativen Ausführungsform erfolgt zusätzlich zur Variation der Belichtungszeit eine Variation der Emission des Beleuchtungsstrahls. Die beiden Variation sind dabei dergestalt aufeinander abgestimmt, dass reflektierte Beleuchtungsstrahlung von Beleuchtungsstrahlblitzen geringerer Intensität mit längeren Belichtungszeiten erfasst werden als Beleuchtungsstrahlblitz grösserer Intensität, wobei die Belichtungszeit derart lang ist, dass die geringere Intensität kompensiert wird. Vorzugsweise werden Belichtungszeit und Emission derart angepasst aneinander variiert, dass die detektierte Helligkeit der Reflexflecke der Abfolge unabhängig von der Intensität des Beleuchtungsstrahls innerhalb eines Standarthelligkeitsbereichs liegt. Mit anderen Worten wird ein jedes Bild derart lange belichtet, dass die detektierte Helligkeit des jeweiligen Reflexflecks innerhalb definierter Grenzen liegt. Optional sind die Grenzen dabei derart eng gesteckt, dass die detektierten Helligkeiten aller Reflexflecke gleich sind. Analog zum Beispiel oben ist dann eine Identifizierbarkeit von Beleuchtungsstrahlung dadurch gegeben, dass die Abfolge der Reflexflecke mit der Variation der Emission und derjenigen der Belichtungszeit korrespondiert, die Abfolge von Fremdreflexen hingegen jedoch nicht, z.B. zeigen eine solche Fremdreflexabfolge dann Helligkeitswechsel.

Optional weist das Vermessungsgerät einer jeden Ausführungsform eine Winkelmessfunktionalität zur hochpräzisen Erfassung der aktuellen Ausrichtung der Zielachse bezüglich der zwei Rotationsachsen auf und eine Distanzmessfunktionalität zur Bestimmung der jeweils aktuellen Entfernung zum Zielpunkt, also der Distanz zwischen dem Vermessungsgerät und dem Ziel, wobei sowohl die Ausrichtungserfassung als auch die Entfernungsbestimmung fortlaufend erfolgen können. Als weitere Option ist die Steuer- und Auswerteeinheit einer jeden Ausführungsform dergestalt ausgebildet, dass die Variation derart erfolgt, dass die Helligkeit eines jeden Reflexflecks aus einer Abfolge von Beleuchtungsstrahlblitzen ausreichend ist, um seine Lage im Bild präzise zu detektieren. Beispielsweise werden Intensität und/oder Emissionsdauer im Rahmen der Variation derart geregelt, dass eine Mindesthelligkeit der Reflexflecke jedenfalls erreicht wird, die ausreichend für ein präzises Detektieren der Lage des Reflexflecks oder seiner Grösse ist. Analog erfolgt dies alternativ oder zusätzlich für die sensorbezogenen Variationen.

Als weiter Option ist die Steuer- und Auswerteeinheit einer jeden Ausführungsform dergestalt ausgebildet, dass im Rahmen der Feinanzielungs- und Zielverfolgungsfunktionalität mittels eines Tracking-Algorithmus eine Verknüpfung der Reflexflecke der Beleuchtungsstrahlblitze der Abfolge erfolgt, so dass ein Wandern der Reflexflecke in den Bildern aufgrund einer Relativbewegung von Zielpunkt zu Vermessungsgerät verfolgbar ist. Unter einem Wandern ist dabei eine andere Lage eines Reflexflecks im Vergleich zu einem Reflexfleck aus einem vorhergehenden bzw. nachfolgenden Bild. Die Verknüpfung von Reflexflecken mehrerer Bilder erfolgt z.B. mittels eines find-best-match-Algorithmus, wodurch die einer Abfolge zugehörigen Reflexflecke logisch verkettet werden.

Die vorliegende Erfindung betrifft ausserdem ein Verfahren für ein erfindungsgemässes Vermessungsgerät. Im Rahmen des Verfahrens werden mittels der Feinanzielungs- und Zielverfolgungsfunktionalität fortlaufend Beleuchtungsstrahlblitze durch Emission des Beleuchtungsstrahls erzeugt, fortlaufend reflektierte Beleuchtungsstrahlblitze als Reflexfleck im Bild erfasst, eine Abweichung zwischen einer jeweils aktuellen, tatsächlichen Ausrichtung der Zielachse und einer fiktiven, den Zielpunkt anvisierenden Ausrichtung der Zielachse aus einer detektierten Lage des Reflexflecks im Bild bestimmt und die Zielachse anhand der bestimmten Abweichung ausgerichtet. Erfindungsgemäss entsteht durch die fortlaufende Erzeugung der Beleuchtungsstrahlblitze eine bekannte Abfolge von Beleuchtungsstrahlblitzen, wobei im Rahmen der Feinanzielungs- und Zielverfolgungsfunktionalität ein Variieren der Intensität und/oder Emissionsdauer des Beleuchtungsstrahls und/oder, abgestimmt mit der Emission des Beleuchtungsstrahls, ein Variieren der Belichtungszeit des photosensitiven flächenhaften Sensors erfolgt, wobei insbesondere zusätzlich die Verstärkung des Sensors variiert wird.

Das Variieren der Emission erfolgt als Option dergestalt, dass die Emission erste Intensitäten umfasst, welche innerhalb eines definierten Standardintensitätsbereichs liegen, und zweite Intensitäten umfasst, welche deutlich unterhalb des definierten Standartintensitätsbereichs liegen. Diese sind dabei bevorzugt ausreichend groß, um eine Detektion zu ermöglichen.

Das Variieren der Emission erfolgt weiter optional abhängig von einer detektierten Helligkeit der Reflexflecke, so dass Veränderungen des optischen Pfades des Beleuchtungsstrahls, welche eine Veränderung der detektierten Helligkeit verursachen, kompensiert werden. Solche Veränderungen des optischen Pfades zwischen dem Vermessungsgerät und dem Zielpunkt sind z.B. durch Regen oder Grenzen zwischen Luftschichten unterschiedlicher optischer Dichte verursacht. Dies kann zu unbeabsichtigten Veränderungen der Helligkeit der Reflexflecke im Laufe der Zeit bzw. von mehreren aufeinander folgenden Bildern führen, welche durch die Steuer- und Auswerteeinheit festgestellt werden, worauf das Variieren angepasst wird, z.B. indem je nach dem ein intensiverer oder schwächerer Beleuchtungsstrahl emittiert und/oder der Verstärkungsfaktor des Sensors erhöht oder erniedrigt wird.

Erfindungsgemäß wird im Rahmen der Feinanzielungs- und Zielverfolgungsfunktionalität eine bekannte Abfolge von Beleuchtungsstrahlblitzen erzeugt. Vorzugsweise mittels Vergleichen von Abfolgen erfasster Lichtflecken mit dieser bekannten Abfolge von Beleuchtungsstrahlblitzen erfolgt weiters ein Identifizieren von vom Zielpunkt reflektierter Beleuchtungsstrahlung. Vorzugsweise erfolgt das Vergleichen anhand detektierter Helligkeiten der Lichtflecken, z.B. indem die Abfolge Lichtflecke verschiedener Helligkeit in einer Reihenfolge aufweist, die einer bekannten Reihenfolge von Beleuchtungsstrahlblitzen verschiedener Intensität und/oder Dauer entspricht, und so diese Lichtfleckabfolge als von Beleuchtungsstrahlung stammend identifiziert wird. Die oben genannte fortlaufende Abhängigkeit der Emissionsvariation von der detektierten Helligkeit bietet dann u.a. den Vorteil, dass ein helligkeitsbasiertes Erkennen von vom Zielpunkt reflektierter Beleuchtungsstrahlung robuster ist, da unabsichtliche Helligkeitsschwankungen, die nicht von der Variation der Emission oder von Sensorparametern herrühren und damit ein Erkennen der Korrespondenz Reflexfleckabfolge - Beleuchtungsstrahlblitzabfolge erschweren, kompensiert werden.

Generell bietet die vorliegende Erfindung den Vorteil, dass mittels der Variation der Emission und/oder Aufnahmeparametern des Sensors wie der Belichtungszeit auf einfache Weise der Nachweis ermöglicht ist, ob eine erfasste Strahlung ein vom Zielpunkt reflektierter Beleuchtungsstrahl ist oder nicht. Ein Fremdreflex wird als solcher erkannt und dadurch wird vermieden, dass die Ausrichtung der Zielachse fälschlicherweise nicht auf den Zielpunkt, sondern auf eine Fremdstrahlungsquelle erfolgt bzw. ein fälschliches Einlocken auf einen Fremdreflex wird rasch erkannt und durch Einlocken auf dem Reflexfleck korrigiert. Dadurch, dass das Erkennen des Reflexflecks auf einer bekannten Abfolge von Beleuchtungsstrahlblitzen bzw. von Lichtflecken in aufeinander folgenden Bildern basiert, wobei die Lage der Lichtflecke von Bild zu Bild variieren kann, ist die vorliegende Erfindung für Zielverfolgungsaufgaben bzw. Messaufgaben in dynamischen Umgebungen besonders vorteilhaft. Durch die erfindungsgemässe Variation wird dabei eine unterbrechungsfreie Zielfeinanzielung bzw. Zielverfolgung ermöglicht, da fortwährend Beleuchtungsstrahlblitze bzw. detektierbare Reflexflecke erzeugt werden. Damit eignet sich die vorliegende Erfindung auch für dynamische Messaufgaben, insbesondere für solche, bei denen sich die relative Lage von Vermessungsgerät und Ziel fortwährend und schnell ändert. Somit ist insgesamt eine Feinanzielung bzw. Zielverfolgung durch die vorliegende Erfindung robuster als bei Verfahren bzw. Geräten nach dem Stand der Technik, wobei das Identifizieren der Beleuchtungsstrahlung einfach und dennoch zuverlässig ist.

Des Weiteren bietet die helligkeitsabhängige Variation den Vorteil, dass automatisch eine Optimierung der Variation erfolgt, auch bei sich ändernden Umgebungsbedingungen. Z.B. werden Störungen durch Witterungseinflüsse erfindungsgemäss kompensiert. Damit erübrigen sich dahingehende manuellen Einstellungen durch den Benutzer, wie sie bei Vermessungsgeräten nach dem Stand der Technik üblich sind. Zudem ist die erfindungsgemässe Kompensation genauer als das nur grobe manuelle Konfigurieren.

Die vorliegende Erfindung beinhaltet des Weiteren ein Computerprogrammprodukt oder Computer-Datensignal, verkörpert durch eine elektromagnetische Welle, mit Programmcode, zur Steuerung bzw. Durchführung des erfindungsgemässen Verfahrens.

Das erfindungsgemässe Vermessungsgerät und das erfindungsgemässe Verfahren werden nachfolgend anhand von den in den Zeichnungen schematisch dargestellten Ausführungen und Anwendungsvorgängen näher beschrieben.

Im Einzelnen zeigen
- Fig.1: schematisch ein erfindungsgemässes Vermessungsgerät und ein von diesem beleuchteten Zielpunkt,
- Fig.2: ein Beispiel für den zeitlichen Verlauf der Intensität des Beleuchtungsstrahls,
- Fig.3a-d: Beispiele für Abfolgen von Reflexflecken und Fremdreflexen,
- Fig.4a-c: ein Beispiel für eine helligkeitsabhängige Variation, und
- Fig.5: ein Beispiel für eine Regelungsschleife zur Optimierung der Variation.

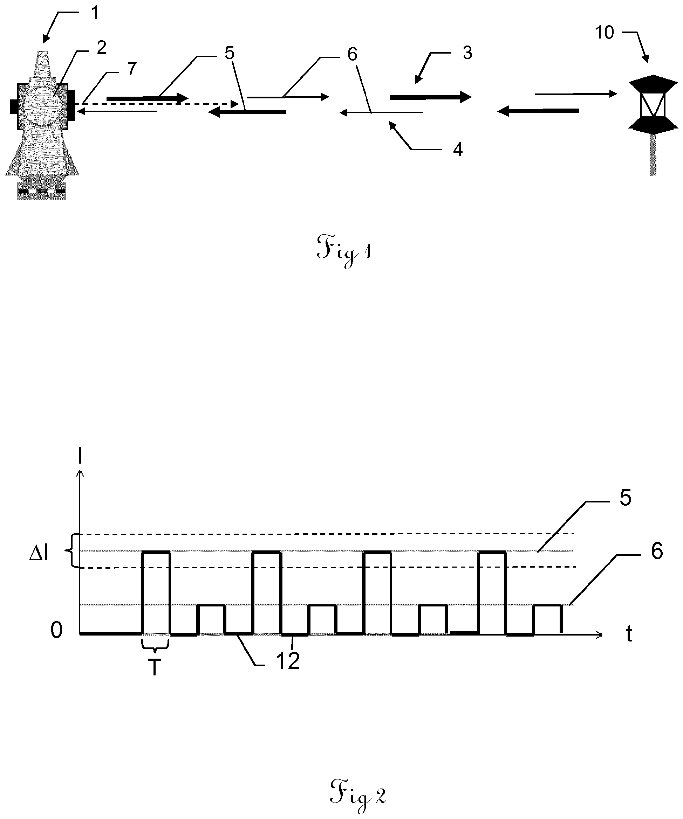

Figur 1 zeigt ein Vermessungsgerät 1, beispielsweise ausgebildet als automatisierte Totalstation oder Lasertracker, mit einer Steuer- und Auswerteeinheit und einer Anzieleinrichtung 2 mit einer Objektiveinheit, beispielsweise einem Zielfernrohr oder einem Teleskop, welche auf ein Zielpunkt 10 ausgerichtet und womit eine optische Zielachse 7 definiert wird. Das Zielobjekt 10 ist beispielsweise als ein Reflektor, insbesondere als ein reflektierendes Prisma, ausgebildet. Das Vermessungsgerät 1 ist mit einer Strahlquelle, z.B. einer Laserlichtquelle, zur Aussendung eines Beleuchtungsstrahls, z.B. eines Laserstrahls, auf den Reflektor 10 ausgestattet, von wo der Beleuchtungsstrahl in Richtung der Anzieleinrichtung 2 zurück reflektiert wird. Die Anzieleinrichtung 2 ist mit einem ortsauflösenden Detektor wie einem photosensitiven Flächensensor, z.B. einem CMOS-2D-Sensor oder einer Kamera, ausgestattet.

Das Vermessungsgerät 1 weist eine Feinanzielungs- und Zielverfolgungsfunktionalität auf. Im Rahmen dieser Funktionalität wird dabei in Richtung der optischen Zielachse 7 der Anzieleinrichtung 2 ein Beleuchtungsstrahl emittiert, dieser wird am Reflektor 10 retroreflektiert und der reflektierte Strahl vom Detektor erfasst. Je nach Abweichung der Ausrichtung der optischen Zielachse 7 vom Reflektor weicht dabei auch die Auftreffposition der reflektierten Strahlung auf dem Detektor bzw. dem ortsauflösenden Sensor von einer zentralen Sensorflächenposition ab (d.h. der Reflexfleck des am Reflektor reflektierten Laserstrahls auf dem Flächensensor liegt nicht in dessen Zentrum und trifft somit nicht auf einer Soll-Position auf, die z.B. anhand Kalibrierung als jene mit der optischen Zielachse korrespondierende Position festgelegt wurde).

Nach der Erfassung des Zielobjekts 10 durch den ATR-Detektor wird die Anzieleinrichtung 2 nachfolgend genauer auf das Zielobjekt 10 ausgerichtet, wobei hier oft eine iterative Annäherung an die ideale, genaue Ausrichtung vorgenommen wird. Neben der Anzielfunktion wird auf ähnliche Weise auch eine automatische Zielverfolgungsfunktionalität bereitgestellt sein. Nach erfolgter Zielobjektfeinanzielung (d.h. nachdem die Anzieleinrichtung 2 mittels eines Motors derart auf das Zielobjekt 10 ausgerichtet ist, dass das Zentrum des Reflexflecks mit der - mit der Zielachse 7 korrespondierenden - Sollposition auf dem Detektor bzw. Flächensensor zusammenfällt) wird dann die Anzieleinrichtung 2 bei fortlaufender Emission des Beleuchtungsstrahls und fortlaufender Erfassung dessen reflektierter Anteile mittels des Sensors weiterhin derart Bewegungen des Zielobjekts 10 "live" und entsprechend schnell nachgeführt werden, dass das Zentrum des Reflexflecks weiterhin möglichst genau und stets auf der Sollposition auf dem Flächensensor bleibt. Es wird dann oft davon gesprochen, dass das Ziel "eingelockt" (oder eingerastet, angekoppelt, mit dem Ziel verriegelt) ist.

Die Emission der Beleuchtungsstrahlen erfolgt fortlaufend dergestalt, dass einzelne Beleuchtungsstrahlblitze 3, 4 erzeugt werden, z.B. Laserpulse. D.h. die Emission erfolgt getaktet mit einer jeweiligen Emissionsdauer. Dabei liegt wie in Fig. 1 durch die Beabstandung der Pfeile symbolisiert, zwischen aufeinanderfolgenden Emissionen und damit zwischen zwei aufeinanderfolgenden Beleuchtungsstrahlblitzen eine Pause, die jedoch nicht notwendig ist. Die in Richtung des Zielobjekts 10 emittierten Beleuchtungsstrahlblitze 3 werden von diesem reflektiert und als reflektierte Beleuchtungsstrahlblitze 4 fortlaufend vom Sensor erfasst.

Erfindungsgemäss ist die Steuer- und Auswerteeinheit derart ausgebildet, dass im Rahmen der Feinanzielungs- und Zielverfolgungsfunktionalität die Emission des Beleuchtungsstrahls variiert wird. Variiert wird z.B. die Emissionsdauer, so dass unterschiedlich lange Beleuchtungsstrahlblitze 3, 4 erzeugt werden oder wie im Beispiel durch die unterschiedlich dicken Pfeile symbolisiert, die Intensität des Beleuchtungsstrahls, so dass unterschiedlich intensive Beleuchtungsstrahlblitze erzeugt werden. Im Beispiel sind dies Beleuchtungsstrahlblitze 3, 4 einer ersten Intensität 5 und Beleuchtungsstrahlblitze 3, 4 einer zweiten Intensität 6, die sich fortlaufend und regelmässig abwechseln. Durch die Variation der Emission, die gemäss einem definierten Algorithmus erfolgt, wird somit eine bekannte Abfolge von Beleuchtungsstrahlblitzen 3, 4 erzeugt. Diese bekannte Abfolge von Beleuchtungsstrahlblitzen 3, 4 wird (bei passender Ausrichtung der Zielachse 7) vom Zielpunkt 10 reflektiert. Damit ist anhand der reflektierten Beleuchtungsstrahlblitze das Zielobjekt 10 für einen Beobachter, der die Abfolge der emittierten Beleuchtungsstrahlblitze 3 kennt, identifizierbar.

Im Beispiel "weiss" die Steuer- und Auswerteeinheit, dass die Abfolge sich abwechselnde Beleuchtungsstrahlblitze 3, 4 der ersten Intensität 5 und der zweiten Intensität 6 aufweist. Erfasst die Steuer- und Auswerteeinheit dann mittels des fotosensitiven Detektors Licht, das diese Abfolge aufweist, dann "weiss" die Steuer- und Auswerteeinheit, dass ebenjenes Licht vom Retroreflektor 10 rückgestrahlter Beleuchtungsstrahl ist. Somit ist eine Unterscheidbarkeit gegeben zwischen auf dem Sensor erfasster Beleuchtungsstrahlung und Fremdstrahlung von anderen Strahlungsquellen. Somit ist mittels Erfassung des reflektierten Beleuchtungsstrahls eine Identifizierbarkeit des Zielobjekts 10 ermöglicht. Dabei ist es hinsichtlich der Identifizierbarkeit nicht notwendig, dass die ersten und zweiten Intensitäten 5, 6 an sich bekannt sind. Die Intensitäten 5, 6 müssen nur derart unterschiedlich sein, dass die Beleuchtungsstrahlblitze der ersten Intensität 5 von den Beleuchtungsstrahlblitzen der zweiten Intensität 6 unterscheidbar sind und somit eine definierte Abfolge von Beleuchtungsstrahlblitzen 3, 4 entsteht. Fremdstrahlung, die neben der reflektierten Beleuchtungsstrahlung auf den Sensor gelangen kann, ist z.B. Sonnenlicht, das direkt oder z.B. von einem spiegelnden Objekt wie einem Auto oder einem anderen Gegenstand mit glänzender gewölbter Oberfläche reflektiert auf den Sensor trifft, oder andere Laserstrahlen. Solch weitere Laserstrahlen können z.B. von einer weiteren Totalstation in der Nähe stammen. Mit der vorliegenden Erfindung ist also ein gleichzeitiges Arbeiten mit mehreren Vermessungsgeräten 1 in der gleichen Messumgebung möglich, beispielsweise auch unter Verwendung des gleichen Retroreflektors 10 für beide Totalstationen,. Die erfindungsgemässe Idee ist natürlich auch mit einem aktiven Zielobjekt 10 realisierbar, das nicht Beleuchtungsstrahlung reflektiert, sondern selbst eine definierte Abfolge von Beleuchtungsstrahlblitzen in Richtung des Beobachters, z.B. die Totalstation oder der Lasertracker, sendet und die Abfolge dem Beobachter dadurch bekannt ist, dass die Information über die Abfolge beim Beobachter vorab hinterlegt oder auf einem gesonderten Übertragungskanal, z.B. per Funk, an ihn übermittelt wird.

Fig. 2 zeigt schematisch den zeitlichen Verlauf der Intensität des Beleuchtungsstrahls des geodätischen Vermessungsgeräts aus Fig. 1. Jeweils während der Emissionsdauer T wird abwechselnd ein Beleuchtungsstrahl der ersten Intensität 5 und ein Beleuchtungsstrahl der zweiten Intensität 6 emittiert, unterbrochen von emissionslosen Zeitabschnitten 12, wodurch die bekannte Abfolge von Beleuchtungsstrahlblitzen entsteht. Die erste Intensität 5 bzw. das Energieniveau der Strahlquelle wird typischerweise zumindest anfangs auf bzw. um die maximale effektive Leistung eingestellt, die im Hinblick auf Schutzbestimmungen zulässig ist. Im Beispiel ist die bekannte Abfolge gleichförmig, mit einem sich fortlaufend wiederholenden Muster von Beleuchtungsstrahlblitzen, welches aus genau einem Beleuchtungsstrahlblitz der ersten Intensität 5 und genau einem Beleuchtungsstrahlblitz der zweiten Intensität 6 besteht bei gleicher Emissionsdauer T für beide Beleuchtungsstrahlblitze. Neben diesem sehr einfach gehaltenen Beispiel sind viele weitere Alternativen denkbar, z.B. eine gleichmässige Abfolge mit einem sich wiederholenden Muster mit mehr als zwei Intensitäten, wobei beispielsweise Beleuchtungsstrahlblitze einer ersten Sorte erzeugt werden, deren Intensitäten innerhalb eins Standardintensitätsbereichs ΔI um die erste Intensität 5 liegt, und Beleuchtungsstrahlblitze einer anderen Sorte mit Intensitäten, die deutlich unterhalb des Standardintensitätsbereichs ΔI liegen, z.B. mit der zweiten Intensität 6 oder in einem Bereich um diese herum. Zusätzlich oder alternativ weist die Abfolge Beleuchtungsstrahlblitze unterschiedlicher Emissionsdauer auf, oder ein Muster mit einer Reihe von Beleuchtungsstrahlblitzen der ersten Intensität 5, die regelmässig von einem Beleuchtungsstrahlblitz der zweiten Intensität 6 "unterbrochen" wird, oder die Variation ist pseudo-zufällig, so dass eine pseudo-zufällige Abfolge von Beleuchtungsstrahlblitzen unterschiedlicher Intensität und/oder Dauer erzeugt wird. Ausschlaggebend für die Erfindung ist lediglich, dass die Variation gemäss einem definierten Algorithmus erfolgt, so dass die Abfolge bekannt ist.

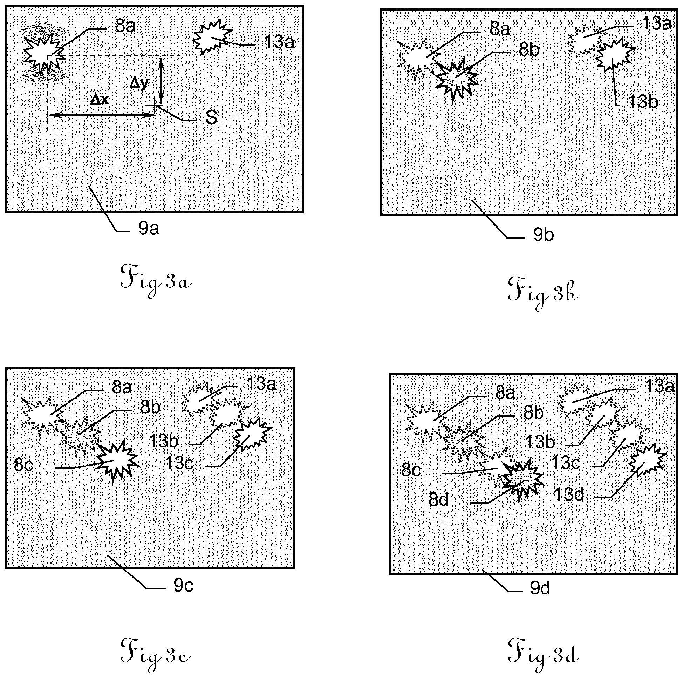

Fig. 3a zeigt ein anhand des ATR-Detektors aufgenommenen ATR-Bild 9a. Ein erfasster Strahl erscheint dabei im Bild als Lichtfleck bzw. eine Gruppe nebeneinander liegender belichteter Pixel, wobei der Sensor derart ausgebildet ist, dass die Helligkeit des Lichtflecks detektierbar bzw. bestimmbar ist. Die Helligkeit wiederum ist abhängig von der Intensität des erfassten Strahls, der Verstärkung des Sensors bzw. der Zeit, während der die entsprechenden Pixel beleuchtet werden. Unter einem Reflexfleck 8a wird hierbei ein Lichtfleck verstanden, der durch reflektierte Beleuchtungsstrahlung erzeugt ist. Ein solcher Reflexfleck 8a mit einer definierten, detektierten Helligkeit ist im Bild 3a schematisch dargestellt. Der Reflexfleck 8a weist einen Offset Δx bzw. Δy von der Sollposition S auf, d.h. die Lage des Reflexflecks 8a im Bild 9a weicht von der Ideallage, die einer den Zielpunkt anvisierenden Ausrichtung der Zielachse entspricht, ab. Im Bild 9a ist zudem ein weiterer Lichtstrahl, z.B. ein Sonnenstrahl oder der Strahl eines Scheinwerfers, als Lichtfleck 13a, im Folgenden als Fremdreflex 13a bezeichnet, erfasst.

Gemäss der festgestellten Abweichung Δx bzw. Δy der Position des Reflexflecks 8a von der Sollposition S werden Korrekturwinkel für die Ausrichtung der Anzieleinrichtung bestimmt und entsprechende Korrekturen mit angesteuerten Stellmotoren vollzogen, bis Reflexfleck 8a und Sollposition S miteinander übereinstimmen, d.h. die Horizontal- und Vertikalwinkel der Visier- bzw. Anzieleinrichtung werden derart geändert und angepasst, bis das Zentrum des Reflexflecks 8a mit der Sollposition S auf dem Flächensensor zusammenfällt. Für eine Zielverfolgung wird dies fortlaufend durchgeführt, wozu fortlaufend Beleuchtungsstrahlblitze emittiert werden und fortlaufend Bilder 9a aufgenommen werden. Dabei sind vorzugsweise Bildaufnahme, damit zusammenhängend die Belichtungsdauer des Sensors, und die Emission des Beleuchtungsstrahls derart aufeinander abgestimmt, dass pro Bild 9a ein Beleuchtungsstrahlblitz erfasst wird und somit ein jeder Reflexfleck 8a durch einen Beleuchtungsstrahlblitz erzeugt ist.

Fig. 3b zeigt ein zweites Bild 9b, das im Anschluss an das Bild 9a aus Fig. 3a bei gleicher Belichtungsdauer und Verstärkung aufgenommen ist. Im Bild 9b erscheint ein zweiter Reflexfleck 8b, der von einem zweiten Beleuchtungsstrahlblitz erzeugt ist. Aufgrund einer veränderten Ausrichtung der Zielachse bzw. Anzieleinrichtung im Rahmen der Feinanziel- und Zielverfolgungsfunktionalität und/oder einer Bewegung des Zielobjekts ist die Lage des zweiten Reflexflecks 8b eine andere als die Lage des vormaligen, ersten, im Bild 9a erfassten ersten Reflexflecks 8a, welcher zum einfacheren Lagevergleich im Bild 9b punktiert angedeutet ist. Aus gleichem Grund weicht die Lage des zweiten Fremdreflexes 13b von der des vormaligen, ersten Fremdreflexes 13a aus Bild 9a ab. Die jeweiligen Lichtflecke 8a, 8b bzw. 13a, 13b werden mittels aus dem Stand der Technik bekannter Tracking-Methoden, beispielsweise mit Hilfe eines find-best-match-Algorithmus, verknüpft, um trotz ihres "Wanderns" von Bild 9a zu Bild 9b das Verhalten, speziell den Verlauf der Helligkeit, der jeweiligen zusammengehörigen Lichtflecke im Lauf der Zeit beobachten zu können.

Die Abfolge der den Reflexflecken 8a und 8b zugrunde liegenden Beleuchtungsstrahlblitze ist gemäss der in Fig. 1 bzw. Fig. 2 dargestellten Form, d.h. der erste Reflexfleck 8a ist durch einen Beleuchtungsstrahlblitz der ersten Intensität erzeugt, der zweite Reflexfleck 8b durch einen Beleuchtungsstrahlblitz der zweiten Intensität. Aufgrund der gleich bleibenden Parameter der Bildaufnahme und der gleichen Emissionsdauer bzw. Dauer der Beleuchtungsstrahlblitze ist deshalb die Helligkeit des ersten Reflexflecks 8a grösser als diejenige des zweiten Reflexflecks 8b, in den Figuren 3a und 3b angedeutet durch deren unterschiedliche Grauwerte. Die detektierte Helligkeit der durch die Strahlung gleich bleibender Intensität verursachten Fremdreflexe 13a und 13b hingegen ist gleich bleibend.

Die Fig. 3c und 3d zeigen entsprechend weitere in Folge aufgenommene Bilder 9c und 9d mit dritten und vierten Reflexflecken 8c und 8d und dritten und vierten Fremdreflexen 13c und 13d. Zum einfacheren Vergleich sind jeweils die vorherigen Lichtflecken punktiert angedeutet. Aufgrund der fortgeführten Variation der Emission des Beleuchtungsstrahls weist der dritte Reflexfleck 8c, erzeugt von einem Beleuchtungsstrahlblitz erster Intensität, die gleiche Helligkeit auf wie der erste Reflexfleck 8c und der vierte Reflexfleck 8d, erzeugt von einem Beleuchtungsstrahlblitz zweiter Intensität, die gleiche Helligkeit wie der zweite Reflexfleck 8b. Die Helligkeiten der Fremdreflexe 13a-13d sind hingegen weiterhin bei angenommen gleich bleibend intensiver Lichtstrahlung unterschiedslos.

Somit ergeben sich aus den Bildern 3a-3d zwei Abfolgen von Lichtflecken, einmal diejenige der Lichtflecken (Reflexflecke) 8a-8d und einmal diejenige der Lichtflecken (Fremdreflexe) 13a-13d. Die Abfolge der Reflexflecke 8a-8d mit ihrem Helligkeitswechsel korrespondiert dabei mit der bekannten Abfolge der Beleuchtungsstrahlblitze, die Abfolge der Fremdreflexe 13a-13d gleich bleibenden Helligkeit hingegen nicht. Dadurch ist anhand der jeweiligen Abfolge unterscheidbar, welche Lichtflecke 8a-8d, bzw. 13a-13d durch Beleuchtungsstrahlung erzeugt sind, also Reflexflecke 8a-8d sind, und welche von Fremdstrahlung herrühren, also Fremdreflexe 13a-13d sind. Somit ist Beleuchtungsstrahlung von Fremdstrahlung unterscheidbar oder anders formuliert vom Zielobjekt reflektierte Beleuchtungsstrahlung identifizierbar.

Der Einfachheit wegen zeigt das vorliegende Beispiel eine sehr einfache Abfolge von Reflexflecken 8a-8d und geht von gleich bleibender Intensität der Fremdstrahlung aus. Gleichwohl ist eine Identifizierbarkeit selbst dann gewährleistet, wenn auch die Intensität der Fremdstrahlung zeitlich nicht konstant ist, d.h. auch die Helligkeit der Fremdreflexe 13a-13d untereinander verschieden ist, da selbst dann die Abfolge dieser Lichtflecke nicht mit der bekannten Abfolge der Beleuchtungsstrahlblitze korrespondiert. Um eine zufällige Korrespondenz von Emissionsänderungen einer Fremdstrahlungsquelle mit der Abfolge von Beleuchtungsstrahlblitzen auszuschliessen, kann eine kompliziertere Beleuchtungsstrahlblitzabfolge als die im Beispiel gewählte herangezogen werden.

Die zweite Intensität des Beleuchtungsstrahls ist dabei dergestalt geringer als die erste Intensität gewählt, dass zum einen die Helligkeiten der Reflexflecke 8a, 8c einerseits und die der Reflexflecke 8b, 8d andererseits sich ausreichend unterscheiden, und zum anderen derart ausreichend gross gewählt, dass ein jeder Reflexfleck 8a-8d, auch die relativ schwachen Reflexflecke 8b, 8d, detektierbar ist, so dass einem jeden Reflexfleck 8a-8d eine Lage im jeweiligen Bild 9a-9d zugeordnet werden kann. Somit ist sowohl die Erkennbarkeit der Korrespondenz Reflexflecke-Beleuchtungsstrahlblitze gegeben als auch eine unterbrechungsfreie Abweichungsbestimmung und damit Zielpunktsverfolgung.

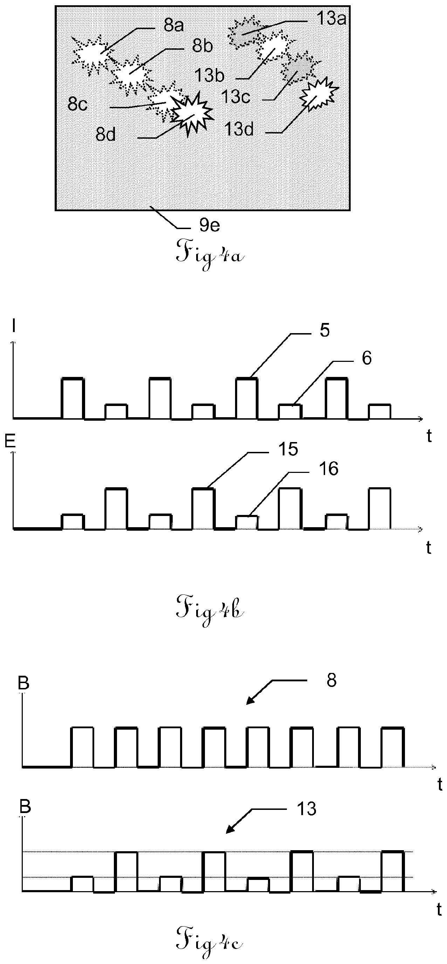

Je nach Messbedingungen können die schwächeren Reflexflecke, also z.B. die Reflexflecke 8b, 8d, aufgrund ihrer relativ geringen Helligkeit nachteilig hinsichtlich einer Feinanzielung bzw. Zielverfolgung sein. Eine Option zur Vermeidung solcher Nachteile trotz Variation der Emission des Beleuchtungsstrahls, wie z.B. nach Fig.2, wird nachfolgend anhand Fig.4 beschrieben.

Fig. 4a zeigt analog zu Fig. 3d ein viertes Bild aus einer Reihe von nacheinander aufgenommenen Bildern mit einem Reflexfleck 8d und einem Fremdreflex 13d. Die vormaligen drei Reflexflecke 8a-8c bzw. Fremdreflexe 13a-13c aus den vorherigen drei Bildern sind wiederum zu Vergleichszwecken punktiert angedeutet. Im Unterschied zum Beispiel nach Fig. 3a-3d zeigen diesmal die Reflexflecke 8a-8d eine gleich bleibend grosse Helligkeit, während die Helligkeit der Fremdreflexe 13a-13d schwankt. Dies wird dadurch erreicht, dass die Belichtungszeit des photosensitiven Sensors des Vermessungsgeräts anhand eines definierten Algorithmus von der Steuer- und Auswerteeinheit dergestalt variiert wird, dass die Variation der Emission, also z.B. der Intensität, kompensiert wird.

In Fig. 4b ist dies schematisch dargestellt. Die Figur zeigt oben den zeitlichen Intensitätsverlauf der Beleuchtungsstrahlblitze analog zu Fig. 2, unten dargestellt ist der zum erstgenannten Zeitverlauf synchrone zeitliche Verlauf der Belichtungszeit E. Die Belichtungszeit E des Sensors ist zur Erfassung der Beleuchtungsstrahlblitze der ersten, grösseren Intensität 5 aus Fig. 2 kürzer als zur Erfassung von Beleuchtungsstrahlblitz der zweiten, geringeren Intensität 6. Mit anderen Worten erfolgt ein fortlaufender Wechsel der Belichtungszeit E zwischen einem ersten relativ grossen Wert 15, mit dem die weniger intensiven Beleuchtungsstrahlblitze erfasst werden, und einem zweiten relativ kleinen Wert 16, mit dem die intensiveren Beleuchtungsstrahlblitze erfasst werden. Die Variation der Belichtungszeit E ist also abgestimmt an die Emission des Beleuchtungsstrahls bzw. die Abfolge der Beleuchtungsstrahlblitze.

Fig. 4c stellt auf andere Weise als Fig. 4a noch einmal das Resultat dieser abgestimmten Variationen dar. Oben in Fig. 4c ist der zeitliche Verlauf der detektierten Helligkeit B der Reflexflecke 8 zu sehen, unten der zeitliche Verlauf der detektierten Helligkeit der Fremdreflexe 13, jeweils synchron zueinander und zu den Zeitachsen aus Fig. 4b. Aufgrund der Variation der Belichtungszeit ist diese für die Beleuchtungsstrahlblitze der Intensität 6 derart verlängert, dass die detektierte Helligkeit B der entsprechenden Reflexflecke (8b, 8d aus Fig. 4a) genauso gross ist wie die detektierte Helligkeit B der Reflexflecke der stärkeren Beleuchtungsstrahlblitze (8a, 8c in Fig. 4a).

Dadurch wird eine Abfolge von Reflexflecken 8 konstant grosser Helligkeit erzeugt.

Die Helligkeit der Fremdreflexe 13 hingegen verändert sich -unter der Voraussetzung einer konstant intensiven Fremdstrahlung- dementsprechend von Bild zu Bild bzw. im Laufe der Zeit t: die Fremdreflexe 13 der längeren Belichtungszeiten (15 in Fig. 4b) erscheinen hell (entsprechen den Fremdreflexen 13b, 13d aus Fig. 4a), diejenigen Fremdreflexe 13, die mit der relativ kurzen Belichtungszeit (16 in Fig. 4b) erfasst sind, weisen dagegen eine geringe Helligkeit auf (entsprechen den Fremdreflexen 13a, 13c aus Fig. 4a). Damit unterscheiden sich die Abfolgen der Lichtflecke 13 hinsichtlich der Helligkeit von derjenigen der Abfolge der Lichtflecke 8, wodurch durch die vorliegende Erfindung eine Identifizierbarkeit der reflektierten Beleuchtungsstrahlung ermöglicht ist.

Alternativ oder zusätzlich zur Anpassung der Belichtungszeit E wird die Verstärkung des Flächensensors variiert, wodurch gleichfalls die detektierte Helligkeit der Reflexflecke 8, 8a-8d analog zur oben geschilderten Vorgehensweise einstellbar ist. Als alternative Lösung erfolgt dies z.B. dann, wenn nicht, wie oben implizit vorausgesetzt, die Dauer der einzelnen Beleuchtungsstrahlblitze (Zeitraum T in Fig. 2) grösser ist als die Belichtungszeit E.

Ist die Belichtungszeit E derart eingestellt, dass in jedem dieser Erfassungsfenster ein jeder Beleuchtungsstrahlblitz vollständig erfasst wird, kann eine Identifizierung des Beleuchtungsstrahls auch dann erfolgen, wenn nur die Belichtungszeit E des Sensors variiert wird, ohne eine Variation der Emission des Strahls. Bei dieser alternativen Ausführungsform werden also lauter gleiche Beleuchtungsstrahlblitze erzeugt, welche mit unterschiedlichen Belichtungszeiten E erfasst werden, wobei Emission und Belichtungszeit E dahingehend aufeinander abgestimmt sind, das eine jede Belichtungszeit E ausreichend lang ist, um jeden vom Zielpunkt reflektierten Beleuchtungsstrahlblitz vollständig zu detektieren. Die Belichtungszeit E wird z.B. variiert, indem abwechselnd eine erste Belichtungszeit und eine zweite Belichtungszeit verwendet wird, wobei die zweite Belichtungszeit länger, z.B. doppelt so lang wie die erste, ist. Da die Emission nicht variiert, ergeben sich wie in Fig. 4a bzw. 4c dargestellt, unabhängig von der Belichtungszeit E Reflexflecke 8a-8d bzw. 8 konstanter Helligkeit B. Die Helligkeit B der Fremdreflexe 13a-13d bzw. 13 variiert jedoch wiederum aus den gleichen Gründen wie oben genannt (unter der Voraussetzung einer Fremdbestrahlung während der gesamten Belichtungszeit, z.B. durch Sonnenlicht oder Scheinwerferlicht), da für den Fremdstrahl eine längere Belichtungszeit E mit grösserer Helligkeit B einhergeht. Es ergibt sich also z.B. wiederum die in Fig. 4 dargestellte Helligkeitsabfolge der Fremdreflexe 13a-13d bzw. 13. Reflexflecke 8, 8a-8d werden bei dieser Alternative also dadurch erkannt, dass sie gleich bleibende Helligkeit B aufweisen.

Berücksichtigt man Signalrauschen, lässt sich der Beleuchtungsstrahl z.B. auch anhand des Signal-Rausch-Verhältnisses identifizieren. Bei gleich bleibend intensivem Beleuchtungsstrahl ist dieses für die Reflexflecke 8, 8a-8d abhängig von der Belichtungszeit E, da der Rauschanteil mit der Belichtungszeit E anwächst, für die Fremdreflexe 13, 13a-13d jedoch nicht, da bei diesen neben dem Rauschanteil wie beschrieben auch der Signalanteil anwächst, so dass das Signal-Rausch-Verhältnis konstant bleibt oder zumindest seine Veränderung sich von derjenigen der Reflexfleckabfolge unterscheidet.

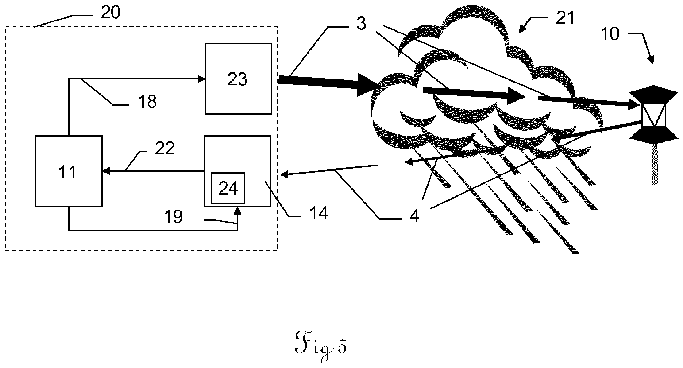

Die detektierte Helligkeit von Reflexflecken wird in einer anhand Fig. 5 beschriebenen Fortbildung dazu verwendet, um die Variation der Beleuchtungsstrahlemission zu optimieren. Fig. 5 zeigt einen Teilbereich 20 des Vermessungsgeräts mit der Strahlquelle 23, z.B. einer Laserdiode, und dem photosensitiven flächenhaften Sensor 14, z.B. einem CMOS-2D-Sensor, mit Mitteln 24 zur Detektion der Helligkeit der von erfasster Strahlung erzeugten Lichtflecke, wobei Aufnahmeparameter wie Belichtungszeit und Verstärkung des Sensors regelbar sind. Der Laser 23 emittiert den Beleuchtungsstrahl in Form von Beleuchtungsstrahlblitzen 3. Diese werden als vom Ziel 10 retro-reflektierte Beleuchtungsstrahlblitze 4 vom Sensor 14 erfasst. Störende Umgebungseinflüsse, wie beispielsweise durch die Regenwolke 21 symbolisierte Witterungseinflüsse, verändern dabei den optischen Pfad des Beleuchtungsstrahls und führen z.B. zur Abschwächung der Beleuchtungsstrahlblitze, symbolisiert durch die abnehmende Dicke der Pfeile 3, 4. Die Mittel 24 zur Helligkeitsdetektion registrieren die Helligkeit des jeweiligen Reflexflecks der rückgestrahlten Beleuchtungsstrahlblitze 4 und übermitteln diese Daten (Pfeil 22) an die Steuer- und Auswerteeinheit 11.

Die Steuer- und Auswerteeinheit 11 wertet die Helligkeitsdaten aus, z.B. indem sie die detektierte Helligkeit mit einer Soll-Helligkeit vergleicht. Stellt die Steuer- und Auswerteeinheit 11 eine Abweichung vom Sollwert fest, d.h. die aktuell erfasste Helligkeit unter- oder überschreitet eine optimale bzw. gewünschte Helligkeit, so regelt die Steuer- und Auswerteeinheit 11 die Emission des Beleuchtungsstrahls und/oder die Bildaufnahme durch den Sensor 14 nach (Pfeile 18 und 19). D.h. die Variation der Emission und/oder die Bildaufnahme erfolgt fortlaufend in Abhängigkeit der aktuell detektierten Helligkeit. Unterschreitet die registrierte Helligkeit den Sollwert, so wird z.B. die Leistung des Lasers 23 erhöht, so dass die Intensität aller Beleuchtungsstrahlblitze erhöht wird und/oder die Belichtungszeit des Sensors 14 wird erhöht, so dass die Pixel länger beleuchtet werden. Durch diese Regelungsschleife werden also Parameter des ATR-Systems wie Beleuchtungsstrahlintensität oder -dauer, Belichtungszeit oder Empfindlichkeit des Sensors automatisch an die jeweils vorliegenden Umgebungsbedingungen angepasst, so dass beispielsweise Störungen durch Regen oder Nebel automatisch kompensiert werden und/oder vermieden wird, den photosensitiven Sensor zu empfindlich einzustellen, da z.B. durch eine unnötig grosse Verstärkung mehr Fremdreflexe erfasst werden, die ansonsten von vorneherein als zu lichtschwach unterdrückt würden.

Wie beschrieben regelt die Regelungsschleife z.B. die Intensität des Beleuchtungsstrahls. Dabei wird bevorzugt nur die Intensität einer Sorte von Beleuchtungsstrahlblitzen direkt helligkeitsabhängig geregelt. So wird z.B. die zweite Intensität (vgl. Fig. 2) angepasst an die detektierte Helligkeit. Diese fortwährende Optimierung der zweiten Intensität erfolgt dabei vor allem mit dem Ziel, trotz störender Umwelteinflüsse jederzeit eine ausreichende Detektierbarkeit aller Reflexflecke zu erhalten. Mit anderen Worten wird durch die Regelung erreicht, dass die Helligkeit der Reflexflecke einen Mindestwert nicht unterschreitet (oder auch überschreitet) bzw. einer Abweichung der Helligkeit von einem Sollwert "sofort" und automatisch entgegengewirkt wird. Die erste, grössere Intensität wird dann aus der zweiten Intensität abgeleitet, z.B. durch Multiplikation mit einem Faktor, welcher beispielsweise fix auf 2, 3 oder 5 festgesetzt ist, so dass die zweite Intensität doppelt, dreifach oder fünffach so gross ist wie die erste Intensität, wobei optional z.B. aus Sicherheitsgründen oder wegen der begrenzten Höchstleistung der Strahlquelle eine Maximalwert für die erste Intensität festgelegt sein kann. Durch diese einfache Abhängigkeit der ersten von der zweiten Intensität wird auf einfache Weise ein ausreichend grosser Unterschied zwischen den Intensitäten und damit der Helligkeit der Reflexflecke auch bei fortlaufender Optimierung der Beleuchtungsstrahlintensität erreicht. Alternativ wird die erste (und ggf. weitere) Intensität nicht indirekt, sondern ebenfalls direkt in Abhängigkeit der detektierten Helligkeit der dazugehörigen Reflexflecke fortlaufend geregelt.

Die Variation der Emission und/oder der Parameter des Flächensensors erfolgt alternativ oder zusätzlich in analoger Weise auch in Abhängigkeit der Entfernung zum Zielpunkt. Diese Entfernung wirkt sich auf die Helligkeit bzw. Detektierbarkeit der Reflexflecke aus, so dass mit einer fortlaufenden Anpassung der Variation nachteilige Effekte kompensierbar sind, die durch Änderungen der Entfernung Vermessungsgerät - Zielpunkt verursacht sind. So sind durch eine entfernungsabhängige Variation z.B. der Beleuchtungsstrahlintensität gleich bleibende Helligkeitsniveaus auch bei Veränderung der Entfernung erreichbar. Eine rein entfernungsabhängige Variation ist z.B. dann sinnvoll, wenn günstige Umgebungsbedingungen, frei von störenden Einflüssen wie Schneefall oder starke Sonneneinstrahlung, vorliegen.

## Patentansprüche

1. Vermessungsgerät (1), insbesondere ausgebildet als Totalstation, Theodolit oder Tachymeter oder Lasertracker, mit Positionsbestimmungsfunktionalität zur Bestimmung der Position eines Zielpunkts (10) mit Bezug zu einem inneren Koordinatensystem, wobei das Vermessungsgerät (1) dafür aufweist
• eine Steuer- und Auswerteeinheit (11) mit Auswerte-, Datenverarbeitungs- und Steuerungsfunktionalität,
• eine Basis,
• eine eine Zielachse (7) definierende Anzieleinrichtung (2), insbesondere ein Zielfernrohr,
• Mittel zur Veränderung der Ausrichtung der Zielachse (7),
• einer Strahlquelle (23) zur Emission eines Beleuchtungsstrahls, insbesondere eines Laserstrahls, definierter Intensität (I) in Richtung der Zielachse (7), wobei mittels der Steuer- und Auswerteeinheit (11) die Emissionsdauer (T) dergestalt regelbar ist, dass fortlaufend Beleuchtungsstrahlblitze (3, 4) erzeugbar sind,
• einen photosensitiven flächenhaften Sensor (14), insbesondere einen CMOS-2D-Sensor, zur Detektion von reflektierten Beleuchtungsstrahlen, wobei
▪ mittels der Steuer- und Auswerteeinheit (11) eine Bildaufnahme durch den Sensor (14) dergestalt regelbar ist, dass fortlaufend reflektierte Beleuchtungsstrahlblitze (4) erfassende Bilder (9a-9e) erzeugbar sind, und
▪ ein auf den Sensor (14) auftreffendes Strahlungsbündel als Lichtfleck (8, 8a-8d, 13, 13a-13d) im Bild erscheint, wobei im Bild ein jeweiliger vom Zielpunkt (10) reflektierter Beleuchtungsstrahlblitz als Reflexfleck (8, 8a-8d) erscheint,
• einer Feinanzielungs- und Zielverfolgungsfunktionalität, wobei im Rahmen der Feinanzielungs- und Zielverfolgungsfunktionalität
▪ aus der detektierten Lage des Reflexflecks (8, 8a-8d) im Bild (9a-9e) eine Abweichung zwischen einer jeweils aktuellen, tatsächlichen Ausrichtung der Zielachse (7) und einer fiktiven, den Zielpunkt anvisierenden Ausrichtung der Zielachse (7) bestimmt wird und
▪ anhand der bestimmten Abweichung mittels der Motorisierungsmittel die Ausrichtung der Zielachse (7) zur Feinanzielung und/oder Verfolgung des Zielpunkts (10) erfolgt, so dass die Zielachse (7) präzise auf den Zielpunkt ausgerichtet wird und/oder die Zielachse (7) fortlaufend einem sich bewegenden Zielpunkt nachgeführt wird,
**dadurch gekennzeichnet, dass**
die Steuer- und Auswerteeinheit (11) dergestalt ausgebildet ist, dass im Rahmen der Feinanzielungs- und Zielverfolgungsfunktionalität automatisch gesteuert durch die Steuer- und Auswerteeinheit (11) entsprechend einem definierten Algorithmus eine Variation der Intensität (I) und/oder der Emissionsdauer (T) des Beleuchtungsstrahls erfolgt, so dass bei fortlaufender Erzeugung der Beleuchtungsstrahlblitze (3, 4) eine bekannte Abfolge von unterschiedlichen Beleuchtungsstrahlblitzen (3, 4) entsteht.

2. Vermessungsgerät (1) nach Anspruch 1,
**dadurch gekennzeichnet, dass**
die Steuer- und Auswerteeinheit (11) ausgebildet ist zur Identifizierung von vom Zielpunkt (10) reflektierter Beleuchtungsstrahlung im Rahmen der Feinanzielungs- und Zielverfolgungsfunktionalität anhand einer mit der bekannten Abfolge von unterschiedlichen Beleuchtungsstrahlblitzen (3, 4) korrespondierenden Abfolge von Reflexflecken (8, 8a-8d), insbesondere wobei für die Identifizierung ein Vergleichen erfolgt von Abfolgen erfasster Lichtflecke (8, 8a-8d, 13, 13a-13d) mit der bekannten Abfolge von Beleuchtungsstrahlblitzen (3, 4) anhand von in der Steuer- und Auswerteeinheit (11) hinterlegter definierter Vergleichskriterien, wobei im Speziellen das Vergleichen hinsichtlich detektierter Helligkeiten der Lichtflecken (8, 8a-8d, 13, 13a-13d) erfolgt.

3. Vermessungsgerät (1) nach Anspruch 1 oder 2,
**dadurch gekennzeichnet, dass**
die Steuer- und Auswerteeinheit (11) dergestalt zur Variation ausgebildet ist, dass sich die Beleuchtungsstrahlblitze (3, 4) wenigstens dergestalt unterscheiden, dass die Abfolge eine Sorte von Beleuchtungsstrahlblitzen (3, 4) erste Intensitäten (5) aufweist, welche innerhalb eines definierten Standardintensitätsbereichs (ΔI) liegen, und eine andere Sorte von Beleuchtungsstrahlblitzen (3, 4) zweiter Intensitäten (6) aufweist, welche deutlich unterhalb des definierten Standardintensitätsbereichs (ΔI) liegen.

4. Vermessungsgerät (1) nach einem der vorherigen Ansprüche,
**dadurch gekennzeichnet, dass**
die Steuer- und Auswerteeinheit (11) dergestalt ausgebildet ist, dass die Variation abhängig ist von einer detektierten Helligkeit (B) des reflektierten Beleuchtungsstrahls, insbesondere wobei
• fortlaufend die Helligkeit (B) der jeweils aktuellen reflektierten Beleuchtungsstrahlblitze (4) detektiert wird und die Emission fortlaufend in Abhängigkeit der jeweils aktuell detektierten Helligkeit (B) variiert wird und/oder
• Aufnahmeparameter, insbesondere Belichtungszeit (E) und/oder Verstärkung, des Sensors (14) variabel sind und Aufnahmeparameter, insbesondere hinsichtlich eines optimalen Signal-Rausch-Verhältnisses, fortlaufend in Abhängigkeit der detektierten Helligkeit (B) angepasst werden.

5. Vermessungsgerät (1) nach Anspruch 3 und 4,
**dadurch gekennzeichnet, dass**
• die zweiten Intensitäten (6) in Abhängigkeit der detektierten Helligkeit (B) geregelt werden und
• die ersten Intensitäten (5) aus den zweiten Intensitäten (6) abgeleitet werden, insbesondere durch Multiplikation mit einem konstanten Faktor, wobei im Speziellen der Faktor mindestens 2, insbesondere mindestens 3, im Speziellen mindestens 5, beträgt.

6. Vermessungsgerät (1) nach einem der vorherigen Ansprüche,
**dadurch gekennzeichnet, dass**
Aufnahmeparameter, insbesondere Belichtungszeit (E) und/oder Verstärkung, des photosensitiven flächenhaften Sensors (14) variabel sind und die Steuer- und Auswerteeinheit (11) dergestalt ausgebildet ist, dass im Rahmen der Feinanzielungs- und Zielverfolgungsfunktionalität zusätzlich zur Variation der Emission des Beleuchtungsstrahls eine Variation von Aufnahmeparametern, insbesondere der Belichtungszeit (E) und/oder Verstärkung, des photosensitiven flächenhaften Sensors (14) erfolgt.

7. Vermessungsgerät (1) nach einem der vorherigen Ansprüche,
**dadurch gekennzeichnet, dass**
die Steuer- und Auswerteeinheit (11) dergestalt ausgebildet ist, dass mittels der Variation eine gleichförmige Abfolge aus einem sich wiederholenden Muster von Beleuchtungsstrahlblitzen (3, 4) erzeugt wird, insbesondere wobei
• sich Beleuchtungsstrahlblitze (3, 4) zweier unterschiedlicher Intensitäten (5, 6) fortwährend abwechseln, und/oder
• die Emissionsdauer (T) aller Beleuchtungsstrahlblitze (3, 4) gleich gross ist,
und/oder die Steuer- und Auswerteeinheit (11) dergestalt ausgebildet ist, dass die Variation abhängig ist von einer Entfernung zum Zielpunkt (10), insbesondere wobei die Emission fortlaufend in Abhängigkeit einer mittels einer Distanzmessfunktionalität des Vermessungsgeräts (1) jeweils aktuellen Entfernung zum Zielpunkt (10) variiert wird.

8. Vermessungsgerät (1), insbesondere ausgebildet als Totalstation, Theodolit oder Tachymeter oder Lasertracker, mit Positionsbestimmungsfunktionalität zur Bestimmung der Position eines Zielpunkts (10) mit Bezug zu einem inneren Koordinatensystem, wobei das Vermessungsgerät (1) dafür aufweist
• eine Steuer- und Auswerteeinheit (11) mit Auswerte-, Datenverarbeitungs- und Steuerungsfunktionalität,
• eine Basis,
• eine eine Zielachse (7) definierende Anzieleinrichtung (2), insbesondere ein Zielfernrohr,
• Mittel zur Veränderung der Ausrichtung der Zielachse (7),
• einer Strahlquelle (23) zur Emission eines Beleuchtungsstrahls, insbesondere eines Laserstrahls, definierter Intensität in Richtung der Zielachse (7), wobei mittels der Steuer- und Auswerteeinheit (11) die Emissionsdauer (T) dergestalt regelbar ist, dass fortlaufend Beleuchtungsstrahlblitze (3, 4) erzeugbar sind,
• einen photosensitiven flächenhaften Sensor (14), insbesondere einen CMOS-2D-Sensor, mit variabler Belichtungszeit (E), insbesondere und variabler Verstärkung, zur Detektion von reflektierten Anteilen des Beleuchtungsstrahls, wobei
▪ mittels der Steuer- und Auswerteeinheit (11) eine Bildaufnahme durch den Sensor (14) dergestalt regelbar ist, dass fortlaufend reflektierte Beleuchtungsstrahlblitze (4) erfassende Bilder (9a-9e) erzeugbar sind, und
▪ ein auf den Sensor (14) auftreffendes Strahlungsbündel als Lichtfleck (8, 8a-8d, 13, 13a-13d) im Bild erscheint, wobei im Bild (9a-9e) ein jeweiliger vom Zielpunkt reflektierter Beleuchtungsstrahlblitz als Reflexfleck (8, 8a-8d)erscheint,
• einer Feinanzielungs- und Zielverfolgungsfunktionalität, wobei im Rahmen der Feinanzielungs- und Zielverfolgungsfunktionalität
▪ aus der detektierten Lage des Reflexflecks (8, 8a-8d)im Bild (9a-9e) eine Abweichung zwischen einer jeweils aktuellen, tatsächlichen Ausrichtung der Zielachse (7) und einer fiktiven, den Zielpunkt (10) anvisierenden Ausrichtung der Zielachse (7) bestimmt wird und
▪ anhand der bestimmten Abweichung mittels der Motorisierungsmittel die Ausrichtung der Zielachse (7) zur Feinanzielung und/oder Verfolgung des Zielpunkts (10) erfolgt, so dass die Zielachse (7) präzise auf den Zielpunkt ausgerichtet wird und/oder die Zielachse (7) fortlaufend einem sich bewegenden Zielpunkt nachgeführt wird,
**dadurch gekennzeichnet, dass**
die Steuer- und Auswerteeinheit (11) dergestalt ausgebildet ist, dass im Rahmen der Feinanzielungs- und Zielverfolgungsfunktionalität
• mittels fortlaufender Erzeugung der Beleuchtungsstrahlblitze (3, 4) eine bekannte Abfolge von Beleuchtungsstrahlblitzen (3, 4) entsteht und
• automatisch gesteuert durch die Steuer- und Auswerteeinheit (11) entsprechend einem definierten Algorithmus, abgestimmt mit der Emission des Beleuchtungsstrahls, eine Variation der Belichtungszeit (E) des photosensitiven flächenhaften Sensors (14) erfolgt,
so dass bei fortlaufender Erzeugung der Beleuchtungsstrahlblitze (3, 4) eine mit der bekannten Abfolge von Beleuchtungsstrahlblitzen (3, 4) korrespondierende Abfolge von Reflexflecken (8, 8a-8d) erfasst wird, die anhand detektierter Helligkeiten (B) der Reflexflecke (8, 8a-8d) aufgrund der Variation der Belichtungszeit (E) zur Identifizierung von vom Zielpunkt (10) reflektierter Beleuchtungsstrahlung dient,
insbesondere wobei
• für die Identifizierung ein Vergleichen von Abfolgen erfasster Lichtflecke (8, 8a-8d, 13, 13a-13d) mit der bekannten Abfolge von Beleuchtungsstrahlblitzen (3, 4) hinsichtlich detektierter Helligkeiten (B) der Lichtflecke (8, 8a-8d, 13, 13a-13d) anhand von in der Steuer- und Auswerteeinheit (11) hinterlegter definierter Vergleichskriterien erfolgt, und/oder
• zusätzlich eine Variation weiterer Aufnahmeparameter, insbesondere der Verstärkung, des Sensors (14) erfolgt, und/oder
• die Belichtungszeit (E) und/oder Verstärkung fortlaufend abhängig von der detektierten Helligkeit (B) des reflektierten Beleuchtungsstrahls angepasst wird.

9. Vermessungsgerät (1) nach Anspruch 8,
**dadurch gekennzeichnet, dass**
die Steuer- und Auswerteeinheit (11) dergestalt ausgebildet ist, dass zusätzlich zur Variation der Belichtungszeit (E) eine Variation der Emission des Beleuchtungsstrahls erfolgt, wobei die beiden Variationen dergestalt aufeinander abgestimmt sind, dass reflektierte Beleuchtungsstrahlung von Beleuchtungsstrahlblitzen (4) geringerer Intensität (I) mit derart längeren Belichtungszeiten (E) erfasst werden, dass die geringere Intensität (I) kompensiert wird, insbesondere so dass die detektierte Helligkeit (B) der Reflexflecke (8, 8a-8d) der Abfolge unabhängig von der Intensität (I) des Beleuchtungsstrahls innerhalb eines Standarthelligkeitsbereichs liegt, wobei im Speziellen die detektierten Helligkeiten aller Reflexflecke (8, 8a-8d) gleich sind.

10. Vermessungsgerät (1) nach einem der vorherigen Ansprüche,
**dadurch gekennzeichnet, dass**
die Steuer- und Auswerteeinheit (11) dergestalt ausgebildet ist, dass die Variation derart erfolgt, dass die Helligkeit (B) eines jeden Reflexflecks (8, 8a-8d) aus einer Abfolge von Beleuchtungsstrahlblitzen (3, 4) ausreichend ist, um seine Lage im Bild (9a-9e) präzise zu detektieren,
und/oder das Vermessungsgerät
• eine Winkelmessfunktionalität zur, insbesondere fortlaufenden, hochpräzisen Erfassung der aktuellen Ausrichtung der Zielachse (7) bezüglich der zwei Rotationsachsen, und
• eine Distanzmessfunktionalität zur, insbesondere fortlaufenden, Bestimmung der jeweils aktuellen Entfernung zum Zielpunkt (10) aufweist.

11. Vermessungsgerät (1) nach einem der vorherigen Ansprüche,
**dadurch gekennzeichnet, dass**
die Steuer- und Auswerteeinheit (11) dergestalt ausgebildet ist, dass im Rahmen der Feinanzielungs- und Zielverfolgungsfunktionalität mittels eines Tracking-Algorithmus, insbesondere eines find-best-match-Algorithmus, eine Verknüpfung der Reflexflecke (8, 8a-8d) der Beleuchtungsstrahlblitze (3, 4) der Abfolge erfolgt, so dass ein Wandern der Reflexflecke (8, 8a-8d) in den Bildern (9a-9e) aufgrund einer Relativbewegung von Zielpunkt (10) zu Vermessungsgerät (1) verfolgbar ist.

12. Verfahren für ein Vermessungsgerät (1) nach Anspruch 1 oder Anspruch 8, wobei im Rahmen der Feinanzielungs- und Zielverfolgungsfunktionalität
• fortlaufend Beleuchtungsstrahlblitze (3, 4) mittels Emission des Beleuchtungsstrahls erzeugt werden,
• fortlaufend reflektierte Beleuchtungsstrahlblitze (4) als Reflexfleck (8, 8a-8d) im Bild (9a-9e) erfasst werden,
• eine Abweichung zwischen einer jeweils aktuellen, tatsächlichen Ausrichtung der Zielachse (7) und einer fiktiven, den Zielpunkt (10) anvisierenden Ausrichtung der Zielachse (7) aus einer detektierten Lage des Reflexflecks (8, 8a-8d) im Bild (9a-9e) bestimmt werden,
• die Zielachse (7) anhand der bestimmten Abweichung ausgerichtet wird, indem die Zielachse (7) präzise auf den Zielpunkt ausgerichtet wird und/oder die Zielachse (7) fortlaufend einem sich bewegenden Zielpunkt nachgeführt wird,
**dadurch gekennzeichnet, dass**
im Rahmen der Feinanzielungs- und Zielverfolgungsfunktionalität
durch die fortlaufende Erzeugung der Beleuchtungsstrahlblitze (3,4) eine bekannte Abfolge von Beleuchtungsstrahlblitzen (3,4) entsteht und
ein Variieren der Intensität (I) und/oder Emissionsdauer (T) des Beleuchtungsstrahls und/oder, abgestimmt mit der Emission des Beleuchtungsstrahls, ein Variieren der Belichtungszeit (E) des photosensitiven flächenhaften Sensors (14) erfolgt, insbesondere wobei zusätzlich eine Variation einer Verstärkung des Sensors (14) erfolgt.

13. Verfahren nach Anspruch 12, **dadurch gekennzeichnet, dass** das Variieren der Emission
• in Abhängigkeit einer detektierten Helligkeit (B) der Reflexflecke (8, 8a-8d) erfolgt, so dass Veränderungen des optischen Pfades des Beleuchtungsstrahls, welche eine Veränderung der detektierten Helligkeit (B) verursachen, kompensiert werden, und/oder
• dergestalt erfolgt, dass die Emission erste Intensitäten (5) umfasst, welche innerhalb eines definierten Standardintensitätsbereichs (ΔI) liegen, und zweiter Intensitäten umfasst, welche deutlich unterhalb des definierten Standardintensitätsbereichs (ΔI) liegen.

14. Verfahren nach Anspruch 12 oder 13,
**dadurch gekennzeichnet, dass**
im Rahmen der Feinanzielungs- und Zielverfolgungsfunktionalität mittels Vergleichen von Abfolgen erfasster Lichtflecken (8, 8a-8d, 13, 13a-13d) mit der bekannten Abfolge von Beleuchtungsstrahlblitzen (3, 4) ein Identifizieren von vom Zielpunkt (10) reflektierter Beleuchtungsstrahlung erfolgt, insbesondere wobei das Vergleichen anhand detektierter Helligkeiten (B) der Lichtflecken (8, 8a-8d, 13, 13a-13d) erfolgt.

15. Computerprogrammprodukt, das auf einem maschinenlesbaren Träger gespeichert ist, oder Computer-Datensignal, verkörpert durch eine elektromagnetische Welle, mit Programmcode, der geeignet ist zur Durchführung des Verfahrens nach einem der Ansprüche 12 bis 14.

## Claims

1. Surveying device (1), in particular designed as a total station, a theodolite or a tachymeter or a laser tracker, having a position determination functionality for determining the position of a target point (10) with respect to an internal coordinate system, wherein the surveying device (1) has for this purpose
• a control and evaluation unit (11) with an evaluation, data processing and control functionality,
• a base,
• a targeting device (2), in particular a telescopic sight, which defines a target axis (7) ,
• means for changing the orientation of the target axis (7),
• a beam source (23) for emitting an illumination beam, in particular a laser beam, of defined intensity (I) in the direction of the target axis (7), wherein the emission duration (T) can be controlled using the control and evaluation unit (11) in such a manner that illumination beam flashes (3, 4) can be continuously generated,
• a photosensitive areal sensor (14), in particular a CMOS 2D sensor, for detecting reflected illumination beams, wherein
▪ image recording by the sensor (14) can be controlled using the control and evaluation unit (11) in such a manner that images (9a-9e) capturing reflected illumination beam flashes (4) can be continuously generated, and
▪ a radiation beam impinging on the sensor (14) appears in the image as a light spot (8, 8a-8d, 13, 13a-13d), wherein a respective illumination beam flash reflected by the target point (10) appears in the image as a reflected spot (8, 8a-8d) ,
• a fine targeting and target tracking functionality, wherein, in the course of the fine targeting and target tracking functionality,
▪ a deviation between a respective current actual orientation of the target axis (7) and a hypothetical orientation of the target axis (7) sighting the target point is determined from the detected position of the reflected spot (8, 8a-8d) in the image (9a-9e), and
▪ the target axis (7) is oriented for fine targeting and/or tracking of the target point (10) using the determined deviation by means of the motorization means, such that the target axis (7) is precisely aligned with the target point and/or the target axis (7) is continuously tracked to a moving target point,
**characterized in that**
the control and evaluation unit (11) is designed in such a manner that, in the course of the fine targeting and target tracking functionality, the intensity (I) and/or the emission duration (T) of the illumination beam is varied according to a defined algorithm under the automatic control of the control and evaluation unit (11), with the result that a known sequence of different illumination beam flashes (3, 4) is produced during continuous generation of the illumination beam flashes (3, 4).

2. Surveying device (1) according to Claim 1,
**characterized in that**
the control and evaluation unit (11) is designed to identify illumination radiation reflected by the target point (10) in the course of the fine targeting and target tracking functionality using a sequence of reflected spots (8, 8a-8d) corresponding to the known sequence of different illumination beam flashes (3, 4), in particular wherein, for the identification, sequences of captured light spots (8, 8a-8d, 13, 13a-13d) are compared with the known sequence of illumination beam flashes (3, 4) using defined comparison criteria stored in the control and evaluation unit (11), wherein the comparison is effected, in particular, with respect to detected brightnesses of the light spots (8, 8a-8d, 13, 13a-13d) .

3. Surveying device (1) according to Claim 1 or 2,
**characterized in that**
the control and evaluation unit (11) is designed for the variation in such a manner that the illumination beam flashes (3, 4) differ at least in such a manner that the sequence has one type of illumination beam flashes (3, 4) of first intensities (5) which are within a defined standard intensity range (ΔI) and another type of illumination beam flashes (3, 4) of second intensities (6) which are considerably below the defined standard intensity range (ΔI).

4. Surveying device (1) according to any one of the preceding claims,
**characterized in that**
the control and evaluation unit (11) is designed in such a manner that the variation is dependent on a detected brightness (B) of the reflected illumination beam, in particular wherein
• the brightness (B) of the respective current reflected illumination beam flashes (4) is continuously detected and the emission is continuously varied on the basis of the respective currently detected brightness (B), and/or
• recording parameters, in particular the exposure time (E) and/or gain, of the sensor (14) are variable and recording parameters, in particular with regard to an optimum signal-to-noise ratio, are continuously adapted on the basis of the detected brightness (B).

5. Surveying device (1) according to Claims 3 and 4,
**characterized in that**
• the second intensities (6) are controlled dependent on the detected brightness (B), and
• the first intensities (5) are derived from the second intensities (6), in particular by means of multiplication by a constant factor, wherein the factor is, in particular, at least 2, in particular at least 3, in particular at least 5.

6. Surveying device (1) according to any one of the preceding claims,
**characterized in that**
recording parameters, in particular the exposure time (E) and/or gain, of the photosensitive areal sensor (14) are variable and the control and evaluation unit (11) is designed in such a manner that, in the course of the fine targeting and target tracking functionality, recording parameters, in particular the exposure time (E) and/or gain, of the photosensitive areal sensor (14) are varied in addition to varying the emission of the illumination beam.

7. Surveying device (1) according to any one of the preceding claims,
**characterized in that**
the control and evaluation unit (11) is designed in such a manner that a uniform sequence of a repeating pattern of illumination beam flashes (3, 4) is generated by means of the variation, in particular wherein
• illumination beam flashes (3, 4) of two different intensities (5, 6) continuously alternate, and/or
• the emission duration (T) of all illumination beam flashes (3, 4) is the same,
and/or the control and evaluation unit (11) is designed in such a manner that the variation is dependent on a distance to the target point (10), in particular wherein the emission is continuously varied dependent on a respective current distance to the target point (10) determined using a distance measuring functionality of the surveying device (1).

8. Surveying device (1), in particular designed as a total station, a theodolite or a tachymeter or a laser tracker, having a position determination functionality for determining the position of a target point (10) with respect to an internal coordinate system, wherein the surveying device (1) has for this purpose
• a control and evaluation unit (11) with an evaluation, data processing and control functionality,
• a base,
• a targeting device (2), in particular a telescopic sight, which defines a target axis (7),
• means for changing the orientation of the target axis (7),
• a beam source (23) for emitting an illumination beam, in particular a laser beam, of defined intensity in the direction of the target axis (7), wherein the emission duration (T) can be controlled using the control and evaluation unit (11) in such a manner that illumination beam flashes (3, 4) can be continuously generated,
• a photosensitive areal sensor (14), in particular a CMOS 2D sensor, with a variable exposure time (E), and particularly a variable gain, for detecting reflected components of the illumination beam, wherein
c image recording by the sensor (14) can be controlled using the control and evaluation unit (11) in such a manner that images (9a-9e) capturing reflected illumination beam flashes (4) can be continuously generated, and
▪ a radiation beam impinging on the sensor (14) appears in the image as a light spot (8, 8a-8d, 13, 13a-13d), wherein a respective illumination beam flash reflected by the target point appears in the image (9a-9e) as a reflected spot (8, 8a-8d),
• a fine targeting and target tracking functionality, wherein, in the course of the fine targeting and target tracking functionality,
▪ a deviation between a respective current actual orientation of the target axis (7) and a hypothetical orientation of the target axis (7) sighting the target point (10) is determined from the detected position of the reflected spot (8, 8a-8d) in the image (9a-9e), and
▪ the target axis (7) is oriented for fine targeting and/or tracking of the target point (10) using the determined deviation by means of the motorization means, such that the target axis (7) is precisely aligned with the target point and/or the target axis (7) is continuously tracked to a moving target point,
**characterized in that**
the control and evaluation unit (11) is designed in such a manner that, in the course of the fine targeting and target tracking functionality,
• a known sequence of illumination beam flashes (3, 4) is produced by continuously generating the illumination beam flashes (3, 4), and
• the exposure time (E) of the photosensitive areal sensor (14) is varied according to a defined algorithm, matched to the emission of the illumination beam, under the automatic control of the control and evaluation unit (11),
with the result that a sequence of reflected spots (8, 8a-8d) corresponding to the known sequence of illumination beam flashes (3, 4) is captured during continuous generation of the illumination beam flashes (3, 4), which sequence of reflected spots is used to identify illumination radiation reflected by the target point (10) using detected brightnesses (B) of the reflected spots (8, 8a-8d) on the basis of the variation of the exposure time (E),
in particular wherein
• for the identification, sequences of captured light spots (8, 8a-8d, 13, 13a-13d) are compared with the known sequence of illumination beam flashes (3, 4) with regard to detected brightnesses (B) of the light spots (8, 8a-8d, 13, 13a-13d) using defined comparison criteria stored in the control and evaluation unit (11), and/or
• further recording parameters, in particular the gain, of the sensor (14) are additionally varied, and/or
• the exposure time (E) and/or gain is/are continuously adapted dependent on the detected brightness (B) of the reflected illumination beam.

9. Surveying device (1) according to Claim 8,
**characterized in that**
the control and evaluation unit (11) is designed in such a manner that, in addition to varying the exposure time (E), the emission of the illumination beam is varied, wherein the two variations are matched to one another in such a manner that reflected illumination radiation from illumination beam flashes (4) of lower intensity (I) is captured with longer exposure times (E) such that the lower intensity (I) is compensated for, in particular such that the detected brightness (B) of the reflected spots (8, 8a-8d) in the sequence is within a standard brightness range irrespective of the intensity (I) of the illumination beam, wherein, in particular, the detected brightnesses of all reflected spots (8, 8a-8d) are the same.

10. Surveying device (1) according to any one of the preceding claims,
**characterized in that**
the control and evaluation unit (11) is designed in such a manner that the variation is effected such that the brightness (B) of each reflected spot (8, 8a-8d) from a sequence of illumination beam flashes (3, 4) is sufficient to precisely detect its position in the image (9a-9e),
and/or the surveying device has
• an angle-measuring functionality for capturing the current orientation of the target axis (7) with respect to the two axes of rotation in a highly precise manner, in particular continuously, and
• a distance-measuring functionality for determining the respective current distance to the target point (10), in particular continuously.

11. Surveying device (1) according to any one of the preceding claims,
**characterized in that**
the control and evaluation unit (11) is designed in such a manner that, during the fine targeting and target tracking functionality, the reflected spots (8, 8a-8d) of the illumination beam flashes (3, 4) in the sequence are linked using a tracking algorithm, in particular a find-best-match algorithm, with the result that migration of the reflected spots (8, 8a-8d) in the images (9a-9e) on account of a relative movement of the target point (10) with respect to the surveying device (1) can be tracked.

12. Method for a surveying device (1) according to Claim 1 or Claim 8, wherein, in the course of the fine targeting and target tracking functionality,
• illumination beam flashes (3, 4) are continuously generated by emitting the illumination beam,
• reflected illumination beam flashes (4) are continuously captured in the image (9a-9e) as a reflected spot (8, 8a-8d),
• a deviation between a respective current actual orientation of the target axis (7) and a hypothetical orientation of the target axis (7) sighting the target point (10) is determined from a detected position of the reflected spot (8, 8a-8d) in the image (9a-9e),
• the target axis (7) is oriented using the determined deviation, in that the target axis (7) is precisely aligned with the target point and/or the target axis (7) is continuously tracked to a moving target point
**characterized in that**
in the course of the fine targeting and target tracking functionality, a known sequence of illumination beam flashes (3, 4) is produced by the continuous generation of the illumination beam flashes (3, 4) and the intensity (I) and/or emission duration (T) of the illumination beam is varied and/or, matched to the emission of the illumination beam, the exposure time (E) of the photosensitive areal sensor (14) is varied, in particular wherein additionally a gain of the sensor (14) is varied.

13. Method according to Claim 12,
**characterized in that**
the emission is varied
• dependent on a detected brightness (B) of the reflected spots (8, 8a-8d), with the result that changes in the optical path of the illumination beam which change the detected brightness (B) are compensated for, and/or
• in such a manner that the emission comprises first intensities (5) which are within a defined standard intensity range (ΔI) and second intensities which are considerably below the defined standard intensity range (ΔI).

14. Method according to Claim 12 or 13,
**characterized in that**
in the course of the fine targeting and target tracking functionality, illumination radiation reflected by the target point (10) is identified by comparing sequences of captured light spots (8, 8a-8d, 13, 13a-13d) with the known sequence of illumination beam flashes (3, 4), in particular wherein the comparison is effected using detected brightnesses (B) of the light spots (8, 8a-8d, 13, 13a-13d) .

15. Computer program product which is stored on a machine-readable carrier or computer data signal embodied by means of an electromagnetic wave, having program code which is suitable for carrying out the method according to any one of Claims 12 to 14.

## Revendications

1. Appareil de mesure (1), en particulier conçu comme une station totale, un théodolite ou un tachymètre ou un laser de poursuite, avec une fonctionnalité de détermination de la position pour déterminer la position d'un point cible (10) en référence à un système de coordonnées interne, l'appareil de mesure (1) présentant pour cela
• une unité d'analyse et de commande (11) avec une fonctionnalité d'analyse, de traitement des données et de commande,
• une base,
• un dispositif de visée (2) qui définit un axe de cible (7), en particulier une lunette de visée,
• des moyens pour varier l'orientation de l'axe de cible (7),
• une source de rayonnement (23) pour l'émission d'un faisceau d'éclairage, en particulier d'un faisceau laser, d'intensité définie (I) en direction de l'axe de cible (7), cependant que la durée d'émission (T) est réglable au moyen de l'unité d'analyse et de commande (11) de telle manière que des éclairs de faisceau d'éclairage (3, 4) peuvent être générés en continu,
• un capteur photosensible plan (14), en particulier un capteur CMOS-2D, pour la détection de faisceaux d'éclairage réfléchis, cependant
∘ qu'une prise de vue peut être réglée au moyen de l'unité d'analyse et de commande (11) par le capteur (14) de telle manière que des images (9a,9e) qui détectent des éclairs de faisceau d'éclairage réfléchis en continu peuvent être générées et
° qu'un faisceau de rayonnement incident sur le capteur (14) apparaît dans l'image comme une tache de lumière (8, 8a-8d, 13, 13a-13d), cependant qu'un éclair de faisceau d'éclairage réfléchi respectivement par le point cible apparaît dans l'image comme une tache réfléchie 88, 8a-8d),
• une fonctionnalité de visée fine et de suivi de cible, cependant que, dans le cadre de la fonctionnalité de visée fine et de suivi de cible,
° un écart entre une orientation réelle respectivement actuelle de l'axe de cible (7) et une orientation fictive de l'axe de cible (7) qui vise le point cible est déterminé à partir de la position détectée de la tache réfléchie (8, 8a-8d) et
° l'orientation de l'axe de cible (7) est effectuée à l'aide de l'écart déterminé au moyen des moyens de motorisation pour la visée fine et/ou pour le suivi du point cible (10) si bien que l'axe de cible (7) est orienté précisément sur le point cible et/ou l'axe de cible (7) suit en continu un point cible qui se déplace,
**caractérisé en ce que**
l'unité d'analyse et de commande (11) est configurée telle que, dans le cadre de la fonctionnalité de visée fine et de suivi de cible, une variation de l'intensité (I) et/ou de la durée d'émission (T) du faisceau d'éclairage est effectuée en étant commandée de manière automatique par l'unité d'analyse et de commande (11) selon un algorithme défini si bien que, pour une génération en continu des éclairs de faisceau d'éclairage (3, 4), il se forme une succession connue de différents éclairs de faisceau d'éclairage (3, 4).

2. Appareil de mesure (1) selon la revendication 1, **caractérisé en ce que** l'unité d'analyse et de commande (11) est configurée pour l'identification d'un rayonnement d'éclairage réfléchi par le point cible (10) dans le cadre de la fonctionnalité de visée fine et de suivi de cible à l'aide d'une succession de taches réfléchies (8, 8a-8d) qui correspond à la succession connue de différents éclairs de faisceau d'éclairage (3, 4), en particulier cependant que pour l'identification, une comparaison de successions de taches de lumière détectées (8, 8a-8d, 13, 13a-13d) avec la succession connue d'éclairs de faisceau d'éclairage (3, 4) est effectuée à l'aide de critères de comparaison définis mémorisés dans l'unité d'analyse et de commande (11), cependant qu'en particulier la comparaison se fait pour ce qui est des luminosités détectées des taches de lumière (8, 8a-8d, 13, 13a-13d).

3. Appareil de mesure (1) selon la revendication 1 ou 2, **caractérisé en ce que** l'unité d'analyse et de commande (11) est configurée pour la variation de telle manière que les éclairs de faisceau d'éclairage (3, 4) diffèrent au moins de telle manière que la succession d'une sorte d'éclairs de faisceau d'éclairage (3, 4) présente des premières intensités (5) qui se situent à l'intérieur d'une plage d'intensité standard définie (ΔI) et présente une autre sorte d'éclairs de faisceau d'éclairage (3, 4) de secondes intensités (6) qui se situent nettement en dessous de la plage d'intensité standard définie (ΔI).

4. Appareil de mesure (1) selon l'une des revendications précédentes, **caractérisé en ce que** l'unité d'analyse et de commande (11) est configurée de telle manière que la variation dépend d'une luminosité détectée (B) du faisceau d'éclairage réfléchi, en particulier cependant
• que la luminosité (B) des éclairs de faisceau d'éclairage réfléchis respectivement actuels (4) est détectée en continu et que l'émission est variée en continu en fonction de la luminosité détectée respectivement actuelle (B) et/ou
• que des paramètres de prise de vue, en particulier le temps d'exposition (E) et/ou l'amplification, du capteur (14) sont variables et des paramètres de prise de vue sont adaptés, en particulier pour ce qui est d'un rapport signal/bruit optimal, en continu en fonction de la luminosité détectée (B).

5. Appareil de mesure (1) selon la revendication 3 et 4, **caractérisé en ce que**
• les secondes intensités (6) sont réglées en fonction de la luminosité détectée (B) et
• les premières intensités (5) sont dérivées des secondes intensités (6), en particulier par multiplication avec un facteur constant, cependant qu'en particulier le facteur est au moins 2, en particulier au moins 3, en particulier au moins 5.

6. Appareil de mesure (1) selon l'une des revendications précédentes, **caractérisé en ce que** des paramètres de prise de vue, en particulier le temps d'exposition (E) et/ou l'amplification, du capteur plan photosensible (14) sont variables et l'unité d'analyse et de commande (11) est configurée de telle manière que, dans le cadre de la fonctionnalité de visée fine et de suivi de cible, une variation des paramètres de prise de vue, en particulier du temps d'exposition (E) et/ou de l'amplification, du capteur plan photosensible (14), est effectuée en plus de la variation de l'émission du faisceau d'éclairage.

7. Appareil de mesure (1) selon l'une des revendications précédentes, **caractérisé en ce que** l'unité d'analyse et de commande (11) est configurée de telle manière qu'une succession uniforme d'éclairs de faisceau d'éclairage (3, 4) est générée au moyen de la variation à partir d'un modèle d'éclairs de faisceau d'éclairage (3, 4) qui se répète, en particulier cependant
• que des éclairs de faisceau d'éclairage (3, 4) de deux intensités différentes (5, 6) alternent en continu et/ou
• que la durée d'émission (T) de tous les éclairs de faisceau d'éclairage (3, 4) est de même longueur
et/ou l'unité d'analyse et de commande (11) est configurée de telle manière que la variation est fonction d'une distance du point cible (10), en particulier cependant que l'émission est variée en continu en fonction d'une distance du point cible (10) respectivement actuelle au moyen d'une fonctionnalité de mesure de distance de l'appareil de mesure (1).

8. Appareil de mesure (1), en particulier conçu comme une station totale, un théodolite ou un tachymètre ou un laser de poursuite, avec une fonctionnalité de détermination de la position pour déterminer la position d'un point cible (10) en référence à un système de coordonnées interne, l'appareil de mesure (1) présentant pour cela
• une unité d'analyse et de commande (11) avec une fonctionnalité d'analyse, de traitement des données et de commande,
• une base,
• un dispositif de visée (2) qui définit un axe de cible (7), en particulier une lunette de visée,
• des moyens pour varier l'orientation de l'axe de cible (7),
• une source de rayonnement (23) pour l'émission d'un faisceau d'éclairage, en particulier d'un faisceau laser, d'intensité définie (I) en direction de l'axe de cible (7), cependant que la durée d'émission (T) est réglable au moyen de l'unité d'analyse et de commande (11) de telle manière que des éclairs de faisceau d'éclairage (3, 4) peuvent être générés en continu,
• un capteur photosensible plan (14), en particulier un capteur CMOS-2D, pour la détection de faisceaux d'éclairage réfléchis, cependant
° qu'une prise de vue peut être réglée au moyen de l'unité d'analyse et de commande (11) par le capteur (14) de telle manière que des images (9a,9e) qui détectent des éclairs de faisceau d'éclairage réfléchis en continu peuvent être générées et
° qu'un faisceau de rayonnement incident sur le capteur (14) apparaît dans l'image comme une tache de lumière (8, 8a-8d, 13, 13a-13d), cependant qu'un éclair de faisceau d'éclairage réfléchi respectivement par le point cible apparaît dans l'image (9a-9e) comme une tache réfléchie 8, 8a-8d),
• une fonctionnalité de visée fine et de suivi de cible, cependant que, dans le cadre de la fonctionnalité de visée fine et de suivi de cible,
° un écart entre une orientation réelle respectivement actuelle de l'axe de cible (7) et une orientation fictive de l'axe de cible (7) qui vise le point cible (10) est déterminé à partir de la position détectée de la tache réfléchie (8, 8a-8d) et
° l'orientation de l'axe de cible (7) est effectuée à l'aide de l'écart déterminé au moyen des moyens de motorisation pour la visée fine et/ou pour le suivi du point cible (10) si bien que l'axe de cible (7) est orienté précisément sur le point cible et/ou l'axe de cible (7) suit en continu un point cible qui se déplace,
**caractérisé en ce que** l'unité d'analyse et de commande (11) est configurée telle que, dans le cadre de la fonctionnalité de visée fine et de suivi de cible,
• une succession connue d'éclairs de faisceau d'éclairage (3, 4) se forme au moyen de la génération continue des éclairs de faisceau d'éclairage (3, 4) et
• qu'une variation du temps d'exposition (E) du capteur photosensible plan (14) est effectuée en étant commandée automatiquement par l'unité d'analyse et de commande (11) selon un algorithme défini, adaptée à l'émission du faisceau d'éclairage
si bien que, pour une génération en continu des éclairs de faisceau d'éclairage (3, 4), une succession de taches réfléchies (8, 8a-8d) qui correspond à la succession connue d'éclairs de faisceau d'éclairage (3, 4) est détectée qui sert à l'identification d'un rayonnement d'éclairage réfléchi par le point cible (10) à l'aide des luminosités détectées (B) des taches réfléchies (8, 8a-8d) en raison de la variation du temps d'exposition (E), en particulier cependant que
• pour l'identification une comparaison de successions de taches de lumière détectées (8, 8a-8d, 13, 13a-13d) avec la succession connue d'éclairs de faisceau d'éclairage (3, 4) est effectuée pour ce qui est des luminosités détectées (B) des taches de lumière (8, 8a-8d, 13, 13a-13d) à l'aide de critères de comparaison définis mémorisés dans l'unité d'analyse et de commande (11) et/ou
• en plus une variation d'autres paramètres de prise de vue, en particulier de l'amplification, du capteur (14) est effectuée et/ou
• le temps d'exposition (E) et/ou l'amplification est adaptée en continu en fonction de la luminosité détectée (B) du faisceau d'éclairage réfléchi.

9. Appareil de mesure (1) selon la revendication 8, **caractérisé en ce que** l'unité d'analyse et de commande (11) est configurée telle qu'en plus de la variation du temps d'exposition (E) une variation de l'émission du faisceau d'éclairage est effectuée, cependant que les deux variations sont adaptées l'une à l'autre de telle manière qu'un rayonnement d'éclairage réfléchi d'éclairs de faisceau d'éclairage (4) de moindre intensité (I) est détecté avec des temps d'exposition tellement longs que l'intensité moindre (I) est compensée, en particulier si bien que la luminosité détectée (B) des taches réfléchies (8, 8a-8d) de la succession se situe, indépendamment de l'intensité (I) du faisceau d'éclairage, à l'intérieur d'une plage de luminosité standard, cependant qu'en particulier les luminosités détectées de toutes les taches réfléchies (8, 8a-8d) sont identiques.

10. Appareil de mesure (1) selon l'une des revendications précédentes, **caractérisé en ce que** l'unité d'analyse et de commande (11) est configurée de telle manière que la variation est effectuée de manière telle que la luminosité (B) de chaque tache réfléchie (8, 8a-d) à partir d'une succession connue d'éclairs de faisceau d'éclairage (3, 4) est suffisante pour détecter précisément sa position dans l'image (9a-9e) et/ou l'appareil de mesure
• présente une fonctionnalité de mesure d'angle pour la détection, en particulier continue, de haute précision de l'orientation actuelle de l'axe de cible (7) par rapport aux deux axes de rotation et
• une fonctionnalité de mesure de distance pour la détermination en particulier continue de la distance respectivement actuelle par rapport au point cible (10).

11. Appareil de mesure (1) selon l'une des revendications précédentes, **caractérisé en ce que** l'unité d'analyse et de commande (11) est configurée de telle manière que, dans le cadre de la fonctionnalité de visée fine et de suivi de cible, une mise en relation des taches réfléchies (8, 8a-8d) des éclairs de faisceau d'éclairage (3, 4) de la succession est effectuée au moyen d'un algorithme de poursuite, en particulier d'un algorithme find-best-match, si bien qu'une migration des taches réfléchies (8, 8a-8d) peut être suivie dans les images (9a-9e) en raison d'un mouvement relatif du point cible (10) vers l'appareil de mesure (1).

12. Procédé pour un appareil de mesure (1) selon la revendication 1 ou la revendication 8, cependant que, dans le cadre de la fonctionnalité de visée fine et de suivi de cible,
• des éclairs de faisceau d'éclairage (3, 4) sont générés en continu au moyen de l'émission du faisceau d'éclairage,
• des éclairs de faisceau d'éclairage réfléchis (3, 4) sont détectés en continu comme tache réfléchie (8, 8a-8d) dans l'image (9a-9e),
• un écart entre une orientation réelle, respectivement actuelle de l'axe de cible (7) et une orientation fictive qui cible le point cible (10) est déterminé à partir d'une position détectée de la tache réfléchie (8, 8a-8d) dans l'image (9a-9e),
• l'axe de cible (7) est orienté à l'aide de l'écart déterminé, l'axe de cible (8) étant orienté de manière précise sur le point cible et/ou l'axe de cible (7) suivant en continu un point cible qui se déplace,
**caractérisé en ce que**, dans le cadre de la fonctionnalité de visée fine et de suivi de cible, il se forme, par la génération continue des éclairs de faisceau d'éclairage (3, 4), une succession connue d'éclairs de faisceau d'éclairage (3, 4) et une variation de l'intensité (I) et/ou de la durée d'émission (T) du faisceau d'éclairage et/ou, en étant adaptée à l'émission du faisceau d'éclairage, une variation du temps d'exposition (E) du capteur photosensible plan (14) est effectuée, en particulier cependant que de plus une variation d'une amplification du capteur (14) est effectuée.

13. Procédé selon la revendication 12, **caractérisé en ce que** la variation de l'émission
• se fait en fonction d'une luminosité détectée (B) des taches réfléchies (8, 8a-8d) si bien que des modifications du trajet optique du faisceau d'éclairage qui causent une modification de la luminosité détectée (B) sont compensées et/ou
• se fait de telle manière que l'émission comprend des premières intensités (5) qui se situent à l'intérieur d'une plage d'intensités standard définie (ΔI) et des secondes intensités qui se situent nettement en en dessous de la plage d'intensité standard définie (ΔI).

14. Procédé selon la revendication 12 ou 13, **caractérisé en ce que**, dans le cadre de la fonctionnalité de visée fine et de suivi de cible, une identification d'un rayonnement d'éclairage réfléchi par le point cible (10) est effectuée par comparaison de successions de taches de lumière détectées (8, 8a-8d, 13, 13a-13d) avec la succession connue d'éclairs de faisceau d'éclairage (3, 4), en particulier cependant que la comparaison est effectuée à l'aide de luminosités détectées (B) des taches de lumière (8, 8a-8d, 13, 13a-13d).

15. Produit programme d'ordinateur qui est mémorisé sur un support lisible par machine ou signal de données informatiques, représenté par une onde électromagnétique, avec un code de programme qui est approprié pour exécuter le procédé selon l'une des revendications 12 à 14.
